# EUROPEAN PATENT SPECIFICATION

(11) **EP 3 872 966 B1**
(45) Date of publication and mention of the grant of the patent: **02.09.2026**
(21) Application number: 19875956.5
(22) Date of filing: 24.10.2019
(51) Int. Cl.: H02K 3/12, H02K 3/28

(54) **MOTOR STATOR AND MOTOR**
MOTORSTATOR UND MOTOR
STATOR DE MOTEUR ET MOTEUR

(30) Priority: 24.10.2018 CN 201811244094
(43) Date of publication of application: 01.09.2021
(73) Proprietor: BorgWarner PowerDrive Systems(Tianjin) Co., Ltd., Tianjin 300308 (CN)
(72) Inventor: LIU, Yanhai, Tianjin 300308 (CN); BO, Rongjian, Tianjin 300308 (CN)
(74) Representative: Carangelo, Pierluigi
(86) International application number: PCT/CN2019/113074
(87) International publication number: WO 2020/083345

(56) References cited:
- WO-A1-2006/107993
- CN-A- 1 499 694
- CN-A- 103 190 058
- CN-A- 103 475 121
- CN-A- 106 602 767
- CN-U- 208 835 872
- CN-U- 208 862 653
- JP-A- 2003 180 059
- JP-A- 2016 127 639
- US-A1- 2014 030 078
- US-A1- 2015 091 408

## Description

### Cross-Reference to Related Applications

The present disclosure is a national stage application of International Patent Application No. PCT/CN2019/113074, which is filed on October 24, 2019, and claims priority to Chinese Patent Application No.201811244094.1, filed on October 24, 2018 and entitled "Motor Stator and Motor".

### Technical Field

The present disclosure relates to a field of motors, in particular to a motor stator and a motor.

### Background

In a process of constructing a stator winding of a motor, bus bars and bus bar wires are used to connect outer end portions of slots in phase A, phase B and phase C, and an insulation of the bus bars and the bus bar wires is continuously improved; however, the bus bars and the bus bar wires bring process complexity in a process of manufacturing the stator winding of the motor, which increases a production cost and reduces a production efficiency.

The document US2015091408A1 discloses in a stator constituting a rotary electric machine, a U-shaped first and second divided conductors are disposed at slots. The pitch of a pair of straight parts of the first divided conductor is set larger than that of a pair of straight parts of the second divided conductor. The second divided conductor is disposed on the inner side of the first divided conductor, more specifically, on the stator core side.

The document WO2006107993 A1 discloses a stator for an electric machine, the stator includes a generally cylindrically-shaped stator core having a plurality of circumferentially-spaced and axially-extending core teeth that define a plurality of circumferentially-spaced and axially-extending core slots extending between first and second ends of the stator core. Within the core is a stator winding having a plurality of phases, each of the phases including a pair of conductors connected in parallel and having a plurality of slot segments housed in the core slots. The slot segments are alternately connected at the first and second ends of the stator core by a plurality of end loop segments. The conductors within each pair of each phase are connected in parallel and are in phase with one another such that the stator core has two slots per phase per pole.

The document JP2016127639A discloses a stator of rotating electric machine, the stator comprises a stator core having a plurality of slots in the circumferential direction, and a stator winding 40 wound around the slot of the stator core by winding all nodes. The stator winding is formed by winding the laminated conductor wires formed by laminating flat conductors 45a and 45b around the stator core at both ends in the tensile direction. The stacked wires have a slot holding portion 46 housed in a slot and a coil end 47 connected with slot holding portions 46 housed in different slots outside the slot. The coil ends 47U1 and 47U2, which are connected to the slot receiving portion 46 on the outermost peripheral sides of the two slots, are provided with the torsion portion 48.

The document US2014030078A1 discloses in a stator, segment coils each consisting of a pair of straight portions connected with a connecting portion in a U-like shape are set in slots of a stator core. Each straight portion has distal end parts protruding on an opposite side to the connecting portions. The distal end parts in odd-numbered positions from an outer or inner circumferential side in a radial direction are twisted in one direction and shaped radially outward and the distal end parts located in even-numbered positions are twisted in an opposite direction to the one direction and shaped radially inward to be joined to each other on the same circumference by welding.

### Summary

The problem is solved by means of a motor stator according to claim 1.

Some embodiments of the present disclosure provide a motor stator and a motor, which can simplify a connection of a plurality of slot outer ends in each phase of a stator winding of the motor, simplify processing, reduce a production cost, and improve a production efficiency.

Some embodiments of the present disclosure adopt the following technical solutions.

A motor stator includes a stator iron core, on which a plurality of slots are extended along an axial direction of the stator iron core, the plurality of slots are distributed along a circumferential direction of the stator iron core. The motor stator further includes a stator winding, which including a plurality of coil units, the plurality of coil units including a first coil unit and a third coil unit sequentially sheathed from inside to outside, each of the plurality of coil units including a plurality of conductors, and each of the plurality of conductors including two slot interiors for insertion in different slots of the plurality of slots. Each of the plurality of slots is divided into M layers according to a number of the slots interiors which can be accommodated by the each of the plurality of slots along the radial direction of the stator iron core, M is an integer greater than or equal to 3, and the two slot interiors of each of the plurality of conductors in the first coil unit is in a same layer of two slots. A pitch of the first coil unit in the plurality of coil units is less than a pole pitch of the stator winding, and a pitch of other coil units in the plurality of coil units is equal to the pole pitch of the stator winding.

In some embodiments, each of the plurality of coil units includes a plurality of windings, wherein, each of the plurality of windings includes three groups of phase conductors, at least two conductors disposed adjacent to each other form a group of phase conductors, and two slot interiors of each of the plurality of conductors are respectively a wire inlet slot interior and a wire outlet slot interior; the each of the plurality of conductors further includes a slot outer turning part which is connected with the two slot interiors and forms a U-shaped structure with the two slot interiors, and two slot outer ends which are respectively connected with the two slot interiors; each of the two slot outer ends extends along the circumferential direction of the stator iron core.

In some embodiments, in each group of phase conductors of the first coil unit, a distribution direction, along the circumferential direction of the stator iron core, of a wire inlet slot interior and a wire outlet slot interior in each conductor is opposite to a distribution direction, along the circumferential direction of the stator iron core, of a wire inlet slot interior and a wire outlet slot interior of a conductor adjacent to the each conductor.

In some embodiments, the plurality of coil units further include a second coil unit located between the first coil unit and the third coil unit; in each group of phase conductors of the second coil unit, distribution directions, along the circumferential direction of the stator iron core, of wire inlet slot interiors and wire outlet slot interiors of conductors are a same.

In some embodiments, in coil units of the plurality of coil units except the third coil unit, each slot outer end of each conductor is in a same layer of the plurality of slots as the slot interior adjacent to the each outer end (213) of each conductor.

In some embodiments, distribution directions, along the circumferential direction of the stator iron core, of the slot outer ends in a same layer of the plurality of slots are a same, and distribution directions, along the circumferential direction of the stator iron core, of the two slot outer ends in adjacent two layers of the plurality of slots are opposite.

In some embodiments, two slot interiors of each of the plurality of conductors in the second coil unit are in adjacent two layers of two slots.

In some embodiments, when M is an even number, in the third coil unit, along the circumferential direction of the stator iron core, in each winding, a distribution direction of wire inlet slot interiors and wire outlet slot interiors in one group of phase conductor and a distribution direction of wire inlet slot interiors and wire outlet slot interiors in another group of phase conductor adjacent to the one group of phase conductor are opposite or the same; and when M is an odd number, in the third coil unit, along the circumferential direction of the stator iron core, in each winding, a distribution direction of wire inlet slot interiors and wire outlet slot interiors in one group of phase conductor and a distribution direction of wire inlet slot interiors and wire outlet slot interiors in another group of phase conductor adjacent to the one group of phase conductor are a same.

In some embodiments, when M is an even number, the two slot interiors of each of the plurality of conductors in the third coil unit are in a same layer of two slots; and when M is an odd number, the two slot interiors of each of the plurality of conductors in the third coil unit are in adjacent two layers of two slots.

In some embodiments, when M is an even number, the slot outer end of each of the plurality of conductors in an outer coil unit is in a same layer of the plurality of slots as the slot interior adjacent to it; when M is an odd number, in the third coil unit, the slot outer end adjacent to the slot interior which is close to the second coil unit is in a same layer of the plurality of slots as the slot interior; when the third coil unit is an outer coil unit, a part of the slot outer ends which are adjacent to the slot interior in an outermost layer is in a same layer as the slot interior, and other part of the slot outer ends adjacent to the slot interior in the outermost layer extend from a layer where the slot interior in the outermost layer is to a side which is far away from a central axis of the stator iron core; when the third coil unit is an inner coil unit, a part of the slot outer ends adjacent to the slot interior in an innermost layer are in a same layer as the slot interior in the innermost layer, and other part of the slot outer ends adjacent to the slot interior in the innermost layer extend from a layer where the slot interior in the innermost layer is to a side which is close to the central axis of the stator iron core.

In some embodiments, when M is an even number, distributions directions, along the circumferential direction of the stator iron core, of slot outer ends of the third coil unit are a same; when M is an odd number, in the third coil unit, distribution directions, along the circumferential direction of the stator iron core, of the slot outer ends in same layers of the plurality of the slots are a same, and distribution directions, along the circumferential direction of the stator iron core, of the slot outer ends in adjacent two layers are opposite; when the third coil unit is the outer coil unit, distribution directions, along the circumferential direction of the stator iron core, of the slot outer ends extending from the outermost layer to the side far away from the central axis of the stator iron core are a same, and are opposite to distribution directions, along the circumferential direction of the stator iron core, of the slot outer ends in an outermost layer; when the third coil unit is the inner coil unit, in the third coil unit, distribution directions, along the circumferential direction of the stator iron core, of the slot outer ends extending from the innermost layer to the side close to the central axis of the stator iron core are a same, and are opposite to distribution directions, along the circumferential direction of the stator iron core, of the slot outer ends in the innermost layer.

In some embodiments, two slot outer ends of each conductor are respectively a wire inlet slot outer end and a wire outlet slot outer end; when the third coil unit is an outer coil unit, for in-phase conductors, a plurality of conductors are sequentially connected, and a wire outlet slot outer end of one conductor in two conductors which are adjacent to each other along a connection direction is welded with a wire inlet slot outer end of the other conductor in the two conductors, a wire inlet slot outer end on an outermost side along the connection direction is connected with a phase terminal, and a wire outlet slot outer end on the outermost side along the connection direction is a neutral point of the phase; except the neutral point and the wire inlet slot outer end connected to the phase terminal, each of the slot outer ends of one conductor is welded with a slot outer end of another conductor; the slot outer end of another conductor is in a same radial direction as and disposed adjacent to the each of the slot outer ends of one conductor, and they are in different layers;
when the third coil unit is an inner coil unit, for in-phase conductors, a plurality of conductors are sequentially connected, and a wire outlet slot outer end of one conductor of two conductors which are adjacent to each other along a connection direction is welded with a wire inlet slot outer end of the other conductor of the two conductors, a wire inlet slot outer end on an innermost side along the connection direction is connected with a phase terminal, and a wire outlet slot outer end on an innermost side along the connection direction is a neutral point of the phase; except the neutral point and the wire inlet slot outer end connected to the phase terminal, each of the slot outer ends of one conductor is welded with a slot outer end of another conductor, wherein the slot outer end of another conductor is in a same radial direction as and disposed adjacent to the each of the slot outer ends of one conductor, and they are in different layers.

Some embodiments of the present disclosure further provide a motor, which includes the motor stator.

Some embodiments of the present disclosure have the following beneficial effects: by using the coil unit with the pitch that is equal to the pole pitch and the coil unit with the pitch less than the pole pitch, each slot outer end is directly connected by means of welding, which eliminates an use of a bus bar, simplifies a winding process of the stator winding, improves the production efficiency, and reduces the production cost.

### Brief Description of the Drawings

The accompanying drawings constituting a part of the present disclosure are used for providing further understanding of the present disclosure. Schematic embodiments of the present disclosure and description thereof are used for illustrating the present disclosure and not intended to form an improper limit to the present disclosure. In the accompanying drawings:
Fig. 1 illustrates a structure diagram of a motor stator according to the first embodiment of some embodiments of the present disclosure.
Fig. 2 illustrates a structure diagram of a stator iron core according to the first embodiment of some embodiments of the present disclosure.
Fig. 3 illustrates an upward view of Fig. 1.
Fig. 4 illustrates a structure diagram of a stator winding according to the first embodiment of some embodiments of the present disclosure.
Fig. 5 illustrates a structure diagram of an inner coil unit according to the first embodiment of some embodiments of the present disclosure.
Fig. 6 illustrates a structure diagram of a first conductor A11 in an inner coil unit according to the first embodiment of some embodiments of the present disclosure.
Fig. 7 illustrates a schematic diagram illustrating a position relationship between a single set of phase A conductors that form the inner coil unit and the stator iron core according to the first embodiment of some embodiments of the present disclosure.
Fig. 8 illustrates a structure diagram of a middle coil unit according to the first embodiment of the present disclosure.
Fig. 9 illustrates a structure diagram of a second conductor forming the middle coil unit according to the first embodiment of the present disclosure.
Fig. 10 illustrates a schematic diagram illustrating a position relationship between a single set of phase A conductors that form a middle coil unit and the stator iron core according to the first embodiment of the present disclosure.
Fig. 11 illustrates a structure diagram of an outer coil unit according to the first embodiment of the present disclosure.
Fig. 12 illustrates a structure diagram of a third conductor forming the outer coil unit according to the first embodiment of the present disclosure.
Fig. 13 illustrates a schematic diagram illustrating a position relationship between a type of windings that form the outer coil unit and the stator iron core according to the first embodiment of the present disclosure.
Fig. 14 illustrates a schematic diagram illustrating a position relationship between another type of windings that form the outer coil unit and the stator iron core according to the first embodiment of the present disclosure.
Fig. 15 illustrates a schematic diagram illustrating a position relationship of all the phase A conductors according to the first embodiment of the present disclosure.
Fig. 16 illustrates a structure diagram of a stator winding according to the second embodiment of the present disclosure.
Fig. 17 illustrates a structure diagram of an outer coil unit according to the second embodiment of the present disclosure.
Fig. 18 illustrates a schematic diagram illustrating a position relationship of all the phase A conductors in the outer coil unit according to the second embodiment of the present disclosure.
Fig. 19 illustrates a schematic diagram illustrating a position relationship of all the phase A conductors according to the second embodiment of the present disclosure.
Fig. 20 illustrates a structure diagram of a stator winding of a motor in an odd layer according to the third embodiment of the present disclosure.

The above accompanying drawings include the following reference numbers:
1. stator iron core; 11. tooth-like part;
2. stator winding; 21. inner coil unit; 211. wire inlet slot interior; 212. wire outlet slot interior; 213. slot outer end; 214. slot outer turning part; 2141. first extending part; 2142. turning part; 2143. second extending part; 2144. bending part;
22. middle coil unit; 23. outer coil unit;
311. first slot; 312. second slot; 313. third slot; 314. fourth slot; 315. fifth slot; 316. sixth slot; 317. seventh slot; 318. eighth slot; 319. ninth slot; 320. tenth slot; 321. eleventh slot; 322. twelfth slot; 323. thirteenth; 324. fourteenth slot; 325. fifteenth slot; 326. sixteenth slot; 327. seventeenth slot; 328. eighteenth slot; 329. nineteenth slot; 330. twentieth slot; 331. twenty-first slot; 332. twenty-second slot; 333. twenty-third slot; 334. twenty-fourth slot; 335. twenty-fifth slot; 336. twenty-sixth slot; 337. twenty-seventh slot; 338. twenty-eighth slot; 339. twenty-ninth slot; 340. thirtieth slot; 341. thirty-first slot; 342. thirty-second slot; 343. thirty-third slot; 344. thirty-fourth slot; 345. thirty-fifth slot; 346. thirty-sixth slot; 347. thirty-seventh slot; 348. thirty-eighth slot; 349. thirty-ninth slot; 350. fortieth slot; 351. forty-first slot; 352. forty-second slot; 353. forty-third slot; 354. forty-fourth slot; 355. forty-fifth slot; 356. forty-sixth slot; 357. forty-seventh slot; 358. forty-eighth slot.
41. A phase terminal; 42. B phase terminal; 43. C phase terminal; 44. connector.

### Detailed Description of the Embodiments

The technical solutions of some embodiments in the present disclosure are further described in combination with the accompanying drawings and specific implementation modes.

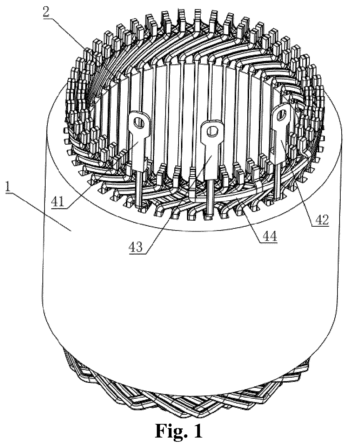

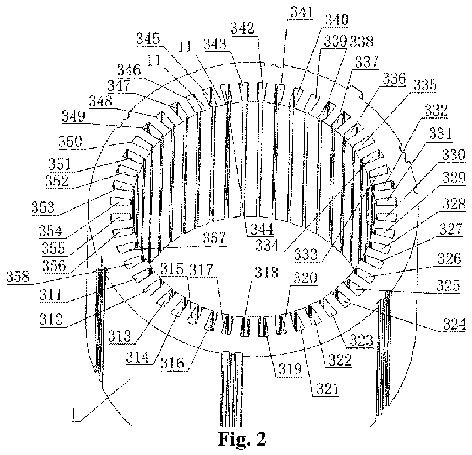

As shown in Fig. 1, some embodiments of the present disclosure provide a motor stator, the motor stator includes a stator iron core 1 which is tubular. As shown in Fig. 2, a plurality of slots are disposed on the stator iron core 1 extended along an axial direction of the stator iron core 1, and the plurality of slots are uniformly distributed along a circumferential direction of the stator iron core 1. In some embodiments, the stator iron core 1 has an annular part and a plurality of tooth-like parts 11 which are uniformly distributed on an inner wall of the annular part along the circumferential direction of the annular part. Each of the plurality of tooth-like part 11 is transversally disposed along the axial direction of the stator iron core 1, and two adjacent tooth-like parts 11 of the plurality of tooth-like parts 11 form one slot. In some embodiments of the present disclosure, a number of a plurality of slots is 48.

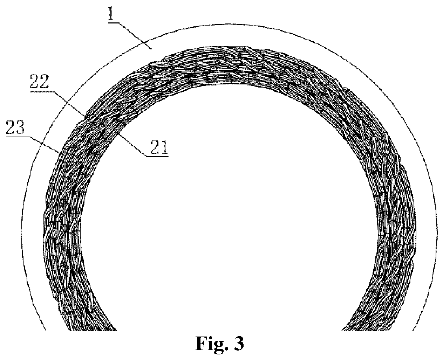

As shown in Fig. 3, the motor stator further includes a stator winding 2, which includes a plurality of coil units, the plurality of coil units include a first coil unit and a third coil unit sequentially sheathed along a radial direction of the stator iron core 1; each of the plurality of coil units includes a plurality of conductors with two slot interiors.

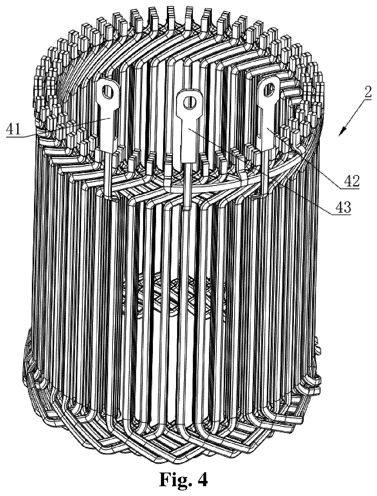

As shown in Fig. 4, each of plurality of coil units includes a plurality of windings, at least two conductors disposed adjacent to each other form a group of phase conductors, and each winding includes three groups of phase conductors. In some embodiments of the present disclosure, each group of phase conductors includes two conductors, and the three groups of phase conductors are respectively two A phase conductors, two B phase conductors and two C phase conductors. Two slot interiors of each of the plurality of conductors are respectively a wire inlet slot interior 211 and a wire outlet slot interior 212. Each of the plurality of conductors includes an slot outer turning part 214 which is connected to the two slot interiors and forms a U-shaped structure with the two slot interiors, and slot outer ends 213 which are respectively connected to the two slot interiors. Both two slot outer ends 213 of each of the plurality of conductors are located on one end in the axial direction of the stator iron core 1, and the slot outer turning part 214 is on the other end in the axial direction of the stator iron core 1. Each of the slot outer ends 213 extends along the circumferential direction of the stator iron core 1. The above A phase, B phase and C phase just represent different phases, and do not represent current directions. The A phase, the B phase and the C phase all refer to any one of U phase, V phase and W phase, and represent different phases respectively.

A pole pitch is equal to a number of phases per winding multiplied by a number of magnetic poles in each group of phase conductors, a coil unit with a pitch less than the pole pitch is a short pitch coil unit, and a coil unit with a pitch equal to the pole pitch is a full pitch coil unit. In some embodiments of the present disclosure, an inner coil unit 21 is the short pitch coil unit, and other coil units are full pitch coil units. In some embodiments, each of the plurality of windings includes three groups of phase conductors, and each group of phase conductors includes two conductors; correspondingly, if a number of magnetic poles of each group of phase conductors is 2, then the pole pitch is equal to 6 (2×3), that is, the pole pitch of the stator winding 2 is six, the pitch of the inner coil unit 21 is five, and the pitch of other coil units is six.

By using the coil unit with the pitch that is less than the pole pitch and the coil unit with the pitch equal to the pole pitch, each slot outer end 213 is directly connected by means of welding in some embodiments, which eliminates an use of a bus bar, simplifies a winding process of the stator winding 2, improves a production efficiency, and reduces a production cost.

Each of the plurality of slots is divided into M layers according to a number of the slots interiors which can be accommodated by the each of the plurality of slots along the radial direction of the stator iron core 1, M is an integer greater than or equal to 3. There is a middle coil unit 22 or no middle coil unit 22 between the inner coil unit 21 and the outer coil unit 23; in some embodiments, for an odd number layer motor, namely M is equal to 3, a number of the middle coil units is 0; M is 3-12. When M is an even number, this type of motor is called an even number layer motor. Taking M=4 as an example, correspondingly one middle coil unit 22 is provided, a winding manner of the stator winding 2 is elaborated below.

As shown in Fig. 4, each of the plurality of slots is divided into four layers along the radial direction of the stator iron core 1 and far away from the central axis of the stator iron core 1, which are respectively a first layer, a second layer, a third layer and a fourth layer.

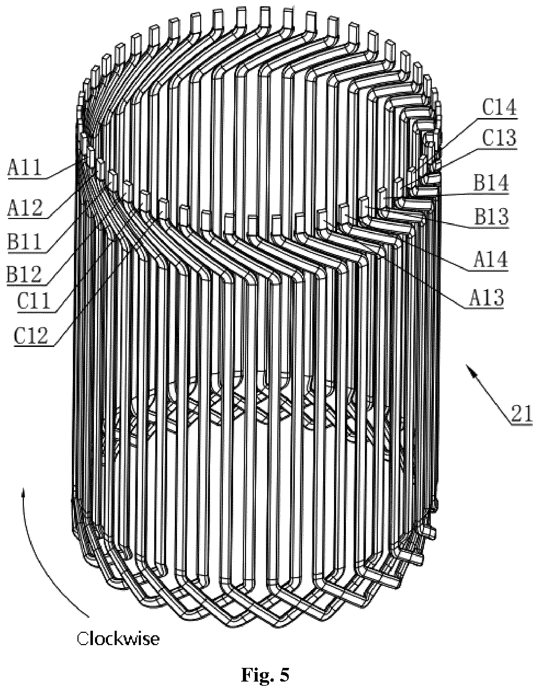

As shown in Fig. 5, two slot interiors of each conductor in each inner coil unit are in a same layer, namely the first layer, because the stator iron core 1 has 48 slots, the inner coil unit 21 is made by winding 24 conductors, that is, the inner coil unit 21 includes four windings, which are respectively a first winding, a second winding, a third winding and a fourth winding. The four windings are uniformly distributed along the circumferential direction of the stator iron core 1, and each winding includes two A phase conductors, two B phase conductors and two C phase conductors which are sequentially distributed, wire inlet slot interiors 211 of each group of phase conductors are in two adjacent slots of the plurality of slots.

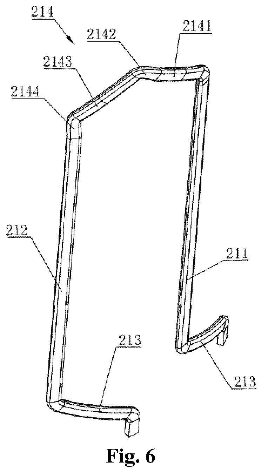

The stator winding is made by winding a plurality of first conductors, a plurality of second conductors and a plurality of third conductors. As shown in Fig. 5 and Fig. 6, the inner coil unit 21 is made by winding a plurality of the first conductors, and each slot outer end 213 extends along the circumferential direction of the stator iron core 1. Referring to Fig. 6, each slot outer end of the first conductor is on a same side as the slot interior adjacent to it; in some embodiments of the present disclosure, the slot outer end adjacent to the wire inlet slot interior 211 is on the right side of the wire inlet slot interior, and the slot outer end adjacent to the wire outlet slot interior 212 is also on the right side of the wire outlet slot interior. Distribution directions, along the circumferential direction of the stator iron core 1, of the slot outer ends 213 of the inner coil unit 21 are the same, that is, the slot outer ends are distributed in a bending manner along a clockwise direction (see a clockwise direction in Fig. 5) relative to the slot interior adjacent to it.

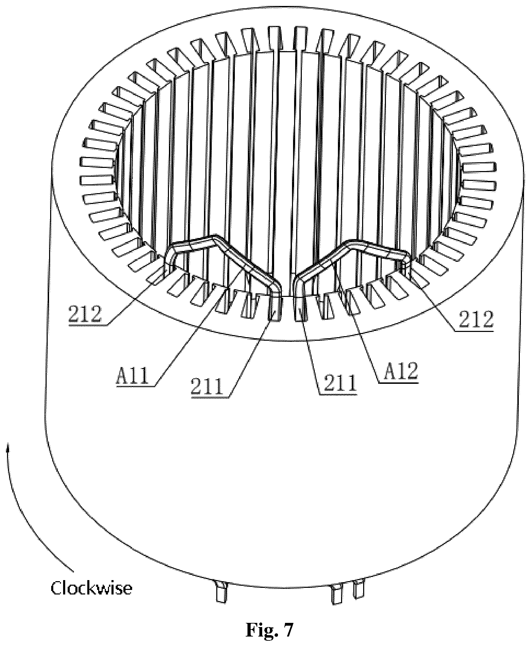

In each group of phase conductors of the inner coil unit 21, distribution directions, along the circumferential direction of the stator iron core 1, of a wire inlet slot interior 211 and a wire outlet slot interior 212 of each conductor are opposite; referring to Fig. 6 and Fig. 7, the wire inlet slot interior 211 and the wire outlet slot interior 212 of an A phase conductor A11 are distributed in the clockwise direction (see a clockwise direction in Fig. 7), and the wire inlet slot interior 211 and the wire outlet slot interior 212 of an A phase conductor A12 are distributed in a counterclockwise direction (a direction opposite to the clockwise direction in Fig. 7).

Two slot interiors of each conductor in the inner coil unit and the slot outer ends adjacent to the each of the two slot interiors are in the same layer, and all of them are in the first layer. In the inner coil unit 21, the wire inlet slot interiors 211 of a plurality of conductors in each winding are sequentially accommodated in the slots disposed adjacent to each other. Along the circumferential direction of the stator iron core 1, a number of slots spaced between the slots, where two adjacent wire inlet slot interiors 211 of two adjacent windings in the inner coil unit 21 are, is six; for example, there are six slots spaced between a slot, where the wire inlet slot interior 211 of a conductor C12 of the C phase conductor in the first winding is, and a slot, where the wire inlet slot interior 211 of a conductor A13 of the A phase conductor in the second winding is.

Winding distributions of four windings of the inner coil unit are a same, and winding distributions of only two adjacent windings (the first winding and the second winding) are described in detail below. Referring to Fig. 2 and Fig. 5 for details, in the first winding, a wire inlet slot interior 211 of A11 is in a first layer of a first slot 311, and a wire outlet slot interior 212 of A11 is in a first layer of a forty-fourth slot 354; a wire inlet slot interior 211 of A12 is in a first layer of a second slot 312, and a wire outlet slot interior 212 of A12 is in a first layer of a seventh slot 317; a wire inlet slot interior 211 of B11 is in a first layer of a third slot 313, and a wire outlet slot interior 212 of B11 is in a first layer of a forty-sixth slot 356; a wire inlet slot interior 211 of B12 is in a first layer of a fourth slot 314, and a wire outlet slot interior 212 of B12 is in a first layer of a ninth slot 319; a wire inlet slot interior 211 of C11 is in a first layer of a fifth slot 315, and a wire outlet slot interior 212 of C11 is in a first layer of a forty-eighth slot 358; and a wire inlet slot interior 211 of C12 is in a first layer of a sixth slot 316, and a wire outlet slot interior 212 of C12 is in a first layer of an eleventh slot 321.

In the second winding, a wire inlet slot interior 211 of A13 is in a first layer of a thirteenth slot 323, and a wire outlet slot interior 212 of A13 is in a first layer of a eighth slot 318; a wire inlet slot interior 211 of A14 is in a first layer of a fourteenth slot 324, and a wire outlet slot interior 212 of A14 is in a first layer of a nineteenth slot 329; a wire inlet slot interior 211 of B13 is in a first layer of a fifteenth slot 325, and a wire outlet slot interior 212 of B13 is in a first layer of a tenth slot 320; a wire inlet slot interior 211 of B14 is in a first layer of a sixteenth slot 326, and a wire outlet slot interior 212 of B14 is in a first layer of a twenty-first slot 331; a wire inlet slot interior 211 of C13 is in a first layer of a seventeenth slot 327, and a wire outlet slot interior 212 of C13 is in a first layer of a twelfth slot 322; and a wire inlet slot interior 211 of C14 is in a first layer of a eighteenth slot 328, and a wire outlet slot interior 212 of C14 is in a first layer of a twenty-third slot 333.

The slot outer turning part 214 includes a first extending part 2141, a turning part 2142, a second extending part 2143 and a bending part 2144. The first extending part 2141 and the bending part 2144 are respectively connected with the two slot interiors. In each conductor of the inner coil unit 21, the first extending part 2141 and the slot interior adjacent to it are both in a same layer and in the first layer. In each conductor of the inner coil unit 21, the second extending part 2143 is on a side, close to the central axis of the stator iron core 1, of a layer where the first extending part 2141 is, the turning part 2142 and the bending part 2144 are both partly on the side, close to the central axis of the stator iron core 1, of a layer where the first extending part 2141 is, and partly in a layer where the first extending part 2141 is. Through a coordination between the turning part 2142 and the bending part 2144, both the two slot interiors are in the first layer, and a part of the whole slot outer turning part 214 is in the first layer, and the other part of the whole slot outer turning part 214 is convexly disposed towards the side close to the central axis of the stator iron core 1, this position is called a virtual zero layer.

Because each slot outer turning part in each phase winding of the inner coil unit has a same structure as a corresponding slot outer turning part in other windings, its position is determined according to a corresponding slot interior. Distribution of the slot outer turning parts corresponding to only A11 and A12 is elaborated below. For example, a wire inlet slot interior 211 of A11 is in a first layer of the first slot 311, a first extending part 2141 connected with the wire inlet slot interior of A11 is in the first layer, the turning part 2142 crosses over into the virtual zero layer from the first layer, the second extending part 2143 is in the virtual zero layer, and the bending part 2144 crosses over into the first layer from the virtual zero layer, and then is connected with the wire outlet slot interior 212 of A11. The wire inlet slot interior 211 of A12 is in the first layer of the first slot 311, the bending part 2144 connected with the wire inlet slot interior of A12 crosses over into the virtual zero layer from the first layer, the second extending part 2143 connected with the bending part 2144 is in the virtual zero layer, the turning part 2142 connected with the second extending part 2143 crosses over into the first layer from the virtual zero layer, and the first extending part 2141 connected with the bending part 2142 is in the first layer, and then is connected with the wire outlet slot interior 212. In some embodiments of the present disclosure, projections of the bending part 2144 and the second extending part 2143 connected with the bending part 2144 onto an axial section of the stator iron core 1 which is parallel to the second extending part 2143 are on a same straight line, and in projections onto an axial section of the stator iron core 1 which is vertical to the second extending part, a length of the bending part 2144 is twice a width of a single conductor.

In some embodiments of the present disclosure, the bending part 2144 of the inner coil unit 21 also is convexly disposed from a layer where the second extending part 2143 is to a side far away from the central axis of the stator iron core 1. Only a distribution of a slot outer turning part corresponding to A11 is described in detail below. For example, the wire inlet slot interior 211 of A11 is in the first layer of the first slot 311, the first extending part 2141 connected with the wire inlet slot interior of A11 is in the first layer, the turning part 2142 crosses over into the second layer from the first layer, the second extending part 2143 is in the second layer, and the bending part 2144 crosses over into the first layer from the second layer, and then is connected with the wire outlet slot interior 212 of A11.

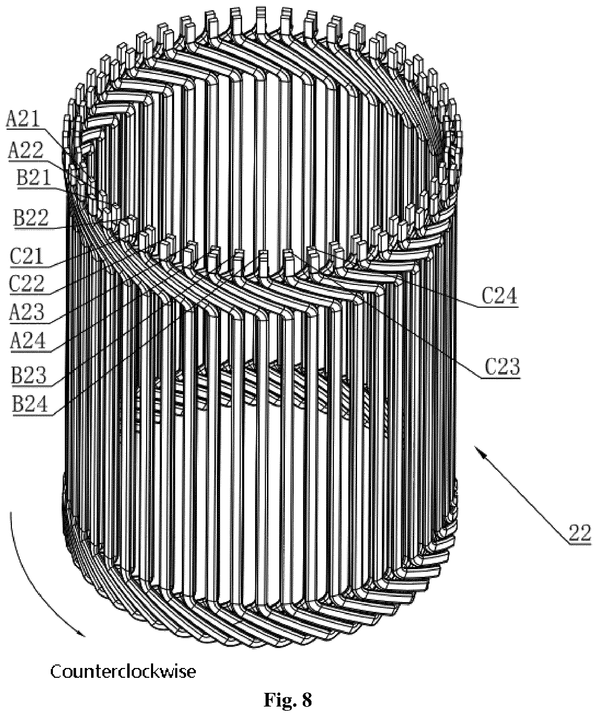

As shown in Fig. 8, each conductor of the middle coil unit 22 includes two slot interiors. The two slot interiors are in adjacent two layers, and in some embodiments, they respectively occupy the second layer and the third layer of the stator iron core 1, and the slot outer end 213 adjacent to each slot interior and the slot interior are in a same layer. The stator iron core 1 has 48 slots, then the inner coil unit 21 is made by winding 48 conductors. The inner coil unit is divided into eight windings, which are respectively a first winding, a second winding, ..., and a eighth winding, and eight windings are uniformly distributed along the circumferential direction of the stator iron core.

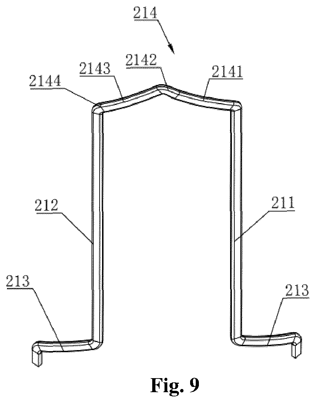

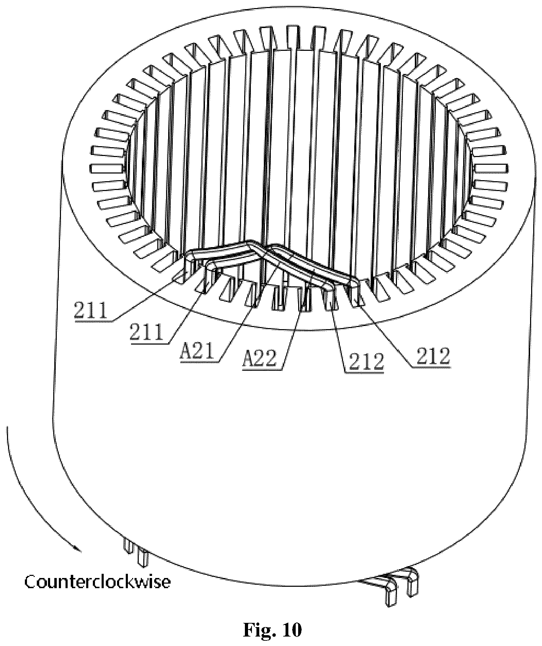

The middle coil unit 22 is made by winding a plurality of second conductors. Referring to Fig. 9, each slot outer end of the second conductor extends along the circumferential direction of the stator iron core and away from the other slot outer end. As shown in Fig. 10, in each group of phase conductors of the middle coil unit 22, distribution directions, along the circumferential direction of the stator iron core 1, of a wire inlet slot interior 211 and a wire outlet slot interior 212 of each conductor are the same; a wire inlet slot interior 211 and a wire outlet slot interior 212 of the A phase conductor A12 are distributed in a counterclockwise direction (see a counterclockwise direction in Fig. 10), and a wire inlet slot interior 211 and a wire outlet slot interior 212 of the A phase conductor A22 are also distributed in the counterclockwise direction (see a counterclockwise direction in Fig. 10). Referring to Fig. 8, in the middle coil unit, distribution directions, along the circumferential direction of the stator iron core 1, of the slot outer ends 213 in a same layer are the same, and distribution directions, along the circumferential direction of the stator iron core 1, of the slot outer ends 213 in two adjacent layers along a radial direction of the stator iron core 1 are opposite, that is, some slot outer ends 213 in the second layer are distributed in a bending manner along a counterclockwise direction (see a counterclockwise direction in Fig. 8), and some slot outer ends 213 in the third layer are distributed in a bending manner along a clockwise direction (a direction opposite to the counterclockwise direction in Fig. 8).

In the middle coil unit 22, the wire inlet slot interiors 211 of the plurality of conductors of each winding are sequentially accommodated in the slots disposed adjacent to each other. Along the circumferential direction of the stator iron core 1, slots where two adjacent wire inlet slot interiors 211 of two adjacent windings of the inner coil unit 21 are disposed adjacent to each other; for example, a slot where a wire inlet slot interior of C22 of the first winding and a slot where a wire inlet slot interior of A23 of the second winding are disposed adjacent to each other. In each conductor of the middle coil unit 22, both a first extending part 2141 and a second extending part 2143 are in a same layer as a slot interior adjacent to them. A bending part 2144 and the second extending part 2143 are in the same layer. A part of the turning part 2142 is in a layer where the first extending part 2141 is, and a part of the turning part 2142 is in a layer where the second extending part 2143 is. Through the turning part 2142, two slot interiors of each conductor are in the second layer and the third layer respectively.

Each slot outer turning part of the middle coil unit 22 is partly in the second layer and partly in the third layer. Because a structure of each slot outer turning part of the middle coil unit 22 is a same, its position is determined according to a corresponding slot interior. Only a distribution of the slot outer turning part corresponding to A21 is described in detail below. For example, a wire inlet slot interior 211 of A12 is in a second layer of the first slot 311, a first extending part 2141 connected with a wire inlet slot interior 211 of A21 is in the second layer, the turning part 2142 crosses over into the third layer from the second layer, a second extending part 2143 is in the third layer, and the bending part 2144 is also in the third layer, and then is connected with a wire outlet slot interior 212 of A21. In some embodiments of the present disclosure, projections of the bending part 2144 and the second extending part 2143 connected with the bending part 2144 onto the axial section of the stator iron core 1 which is parallel to the second extending part 2143 are on a same straight line; The bending part 2144 bends in the third layer, but it needs to be completely in the third layer, or does not bend, that is, the bending part 2144 and the second extending part 2143 form a straight line structure.

Because distribution rules of eight windings of the middle coil unit 22 are a same, and each slot outer end 213 of each conductor is in a same layer as a slot interior adjacent to it, and all of the first extending part 2141, the second extending part 2143, the turning part 2142 and the bending part 2144 are determined according to a distribution rule of two slot interiors of each conductor, a detailed description is given below by only taking specific rules of the slot interiors of two adjacent windings (the first winding and the second winding) as an example.

Referring to Fig. 2 and Fig. 10 for details, in the first winding, the wire inlet slot interior 211 of A21 is in the second layer of the first slot 311, and the wire outlet slot interior 212 of A21 is in the third layer of the seventh slot 317; the wire inlet slot interior 211 of A22 is in a second layer of the second slot 312, and the wire outlet slot interior 212 of A22 is in a third layer of a eighth slot 318; a wire inlet slot interior 211 of B21 is in a second layer of the third slot 313, and a wire outlet slot interior 212 of B21 is in a third layer of the ninth slot 319; a wire inlet slot interior 211 of B22 is in a second layer of the fourth slot 314, and a wire outlet slot interior 212 of B22 is in a third layer of a tenth slot 320; a wire inlet slot interior 211 of C21 is in a second layer of a fifth slot 315, and a wire outlet slot interior 212 of C21 is in a third layer of a eleventh slot 321; and a wire inlet slot interior 211 of C22 is in a second layer of the sixth slot 316, and a wire outlet slot interior 212 of C22 is in a third layer of a twelfth slot 322.

In the second winding, a wire inlet slot interior 211 of A23 is in a second layer of a seventh slot 317, and a wire outlet slot interior 212 of A23 is in a third layer of the thirteenth slot 323; a wire inlet slot interior 211 of A24 is in a second layer of the eighth slot 318, and a wire outlet slot interior 212 of A24 is in a third layer of a fourteenth slot 324; a wire inlet slot interior 211 of B24 is in a second layer of the ninth slot 319, and a wire outlet slot interior 212 of B24 is in a third layer of a fifteenth slot 325; a wire inlet slot interior 211 of B25 is in a second layer of a tenth slot 320, and a wire outlet slot interior 212 of B25 is in a third layer of a sixteenth slot 326; a wire inlet slot interior 211 of C24 is in a second layer of an eleventh slot 321, and a wire outlet slot interior 212 of C24 is in a third layer of a seventeenth slot 327; and a wire inlet slot interior 211 of C25 is in a second layer of a twelfth slot 322, and a wire outlet slot interior 212 of C25 is in a third layer of an eighteenth slot 328.

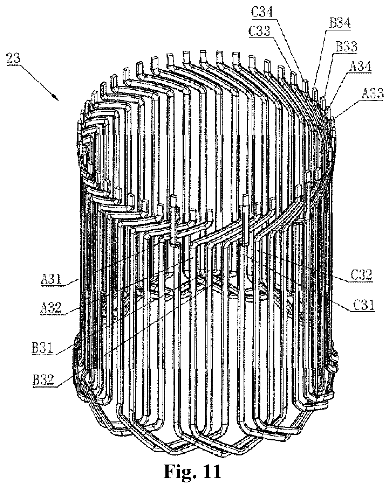

As shown in Fig. 11, each conductor of the outer coil unit 23 includes two slot interiors, and the two slot interiors are in a same layer of the stator iron core 1, namely a fourth layer of the stator iron core 1. The slot outer end 213 adjacent to each slot interior is also in the fourth layer. The stator iron core 1 has 48 slots, then the inner coil unit 21 is made by winding 24 conductors, and is divided into four windings, which are respectively a first winding, a second winding, a third winding and a fourth winding, and four windings are uniformly distributed along the circumferential direction of the stator iron core.

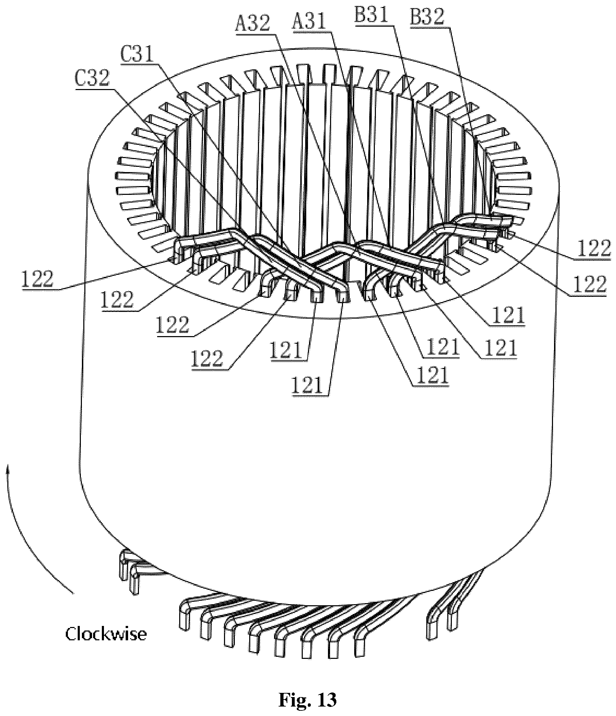

The outer coil unit 23 is made by winding a plurality of third conductors. Referring to Fig. 23, each slot outer end of the third conductor is in a same layer as a slot interior adjacent to it. Distribution directions, along the circumferential direction of the stator iron core 1, of the slot outer ends 213 of the outer coil unit 23 are a same, that is, the slot outer ends are distributed in a bending manner along a clockwise direction (see a clockwise direction in Fig. 13) relative to the slot interior.

In each conductor of the outer coil unit 23, the second extending part 2143 is on a side, far away from the central axis of the stator iron core 1, of a layer where the first extending part 2141 is, and both the turning part 2142 and the bending part 2144 are partly on a side, far away from the central axis of the stator iron core 1, of a layer where the first extending part 2141 is, and partly in a layer where the first extending part 2141 is, so that a part of the whole slot outer turning part 214 is in the fourth layer, and the other part of the whole slot outer turning part 214 are convexly disposed towards the side far away from the central axis of the stator iron core 1, this position is called a virtual fifth layer.

Because slot outer turning parts of the outer coil unit 23 have the same structure, theirs position are determined according to corresponding slot interiors. Only a distribution of a slot outer turning part corresponding to A31 is elaborated below. For example, a wire inlet slot interior 211 of A31 is in a fourth layer of the first slot 311, a first extending part 2141 connected with a wire inlet slot interior of A31 is in the fourth layer, a turning part 2142 crosses over into the virtual fifth layer from the fourth layer, the second extending part 2143 is in the virtual fifth layer, and the bending part 2144 crosses over into the fourth layer from the virtual fifth layer, and then is connected with a wire outlet slot interior 212 of A31. In some embodiments of the present disclosure, projections of the bending part 2144 and the second extending part 2143 connected with the bending part 2144 onto the axial section of the stator iron core 1 which is parallel to the second extending part 2143 are on a same straight line, and in projections onto the axial section of the stator iron core 1 which is vertical to the second extending part, a length of the bending part 2144 is twice a width of a single conductor.

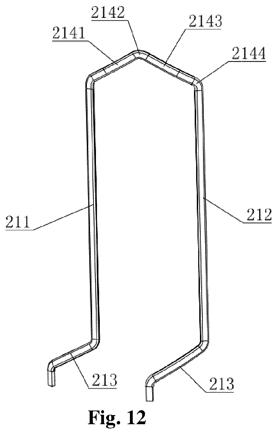

As shown in Fig. 11, in each group of phase conductors of the outer coil unit 23, distribution directions, along the circumferential direction of the stator iron core 1, of a wire inlet slot interior 211 and a wire outlet slot interior 212 of each conductor are a same; as shown in Fig. 12 and Fig. 13, a wire inlet slot interior 211 and a wire outlet slot interior 212 of the A phase conductor A31 are distributed in a counterclockwise direction (see a counterclockwise direction in Fig. 13), and a wire inlet slot interior 211 and a wire outlet slot interior 212 of the A phase conductor A32 are also distributed in the counterclockwise direction (the direction opposite to the counterclockwise direction in Fig. 13).

In some embodiments of the present disclosure, the inner coil unit 21 is made by winding a plurality of first conductors, the middle coil unit 22 is made by winding a plurality of second conductors, and the outer coil unit 23 is made by winding a plurality of third conductors. Each coil unit is made by winding conductors with a same structure, which simplifies a winding mode and improves a winding efficiency.

As shown in Fig. 13, in the outer coil unit 23, the plurality of wire inlet slot interiors 211 of each winding are sequentially accommodated in slots disposed adjacent to each other, and there are six slots spaced between the slots where two adjacent wire inlet slot interiors of two adjacent groups of phase conductors of each winding are; for example, the wire inlet slot interior of A31 of the first winding is in the first slot, the wire inlet slot interior of A32 of the first winding is in the second slot, the wire inlet slot interior of C32 of the first winding is in the sixth slot, and the wire inlet slot interior of A33 of the second winding is in the thirteenth slot.

In each phase winding, distribution directions, along the circumferential direction of the stator iron core, of a wire inlet slot interiors and a wire outlet slot interiors of two adjacent groups of phase conductors are opposite; for example, the wire inlet slot interiors and the wire outlet slot interiors of A31 and A32 are all distributed along the clockwise direction (see the clockwise direction in Fig. 13), the wire inlet slot interiors and the wire outlet slot interiors of B31 and B32 are all distributed along the counterclockwise direction (the direction opposite to the clockwise direction in Fig. 13), and the wire inlet slot interiors and the wire outlet slot interiors of C31 and C32 are all distributed along the clockwise direction (see the clockwise direction in Fig. 13). By limiting the slot interior and the slot outer end, each slot outer end 213 of the outer coil unit 23 is distributed in a bending manner along the clockwise direction (see the clockwise direction in Fig. 13), so that a welding between the slot outer ends of the stator winding is realized without using a bus bar.

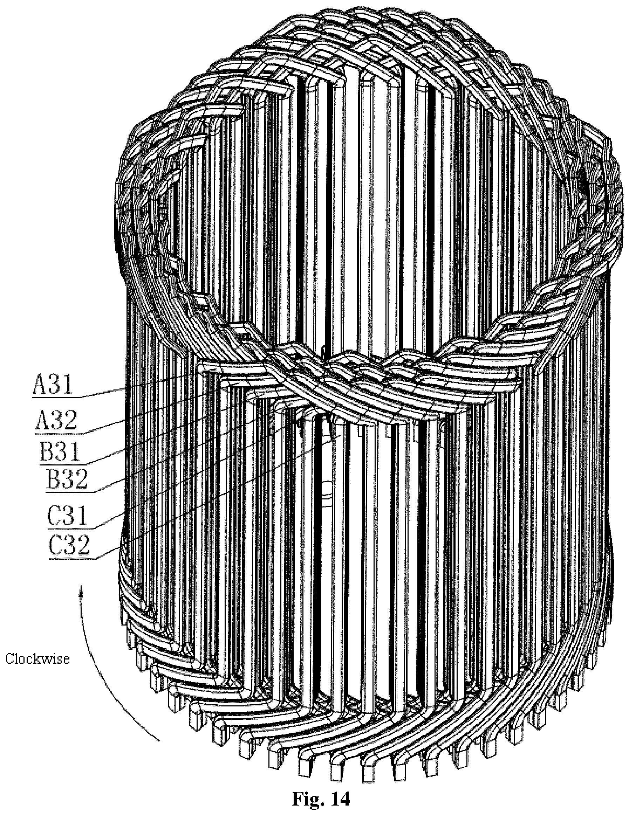

In some embodiments of the present disclosure, in the outer coil unit 23, distribution directions, along the circumferential direction of the stator iron core, of the wire inlet slot interiors and the wire outlet slot interiors of two adjacent groups of phase conductors in each phase winding also is opposite; for example, wire inlet slot interiors and wire outlet slot interiors of A31 and A32 are all distributed along a clockwise direction (see a clockwise direction in Fig. 14), the wire inlet slot interiors and the wire outlet slot interiors of B31 and B32 are all distributed along a clockwise direction (see a clockwise direction in Fig. 14), and the wire inlet slot interiors and the wire outlet slot interiors of C31 and C32 are all distributed along a clockwise direction (see a clockwise direction in Fig. 14). An effect of reducing an use of the bus bar also is achieved by using the outer coil unit with the above structure in coordination with the middle coil unit and the inner coil unit.

Because distribution rules of four windings of the outer coil unit 23 are a same, and each slot outer end 213 is in a same layer as the slot interior adjacent to the each slot outer end 213, and all of the first extending part 2141, the second extending part 2143, the turning part 2142 and the bending part 2144 is determined with reference to distribution rules of the slot interior and the slot outer turning part, a detailed description is given below by only taking specific rules of the slot interiors of two adjacent windings (the first winding and the second winding) as an example.

Referring to Fig. 2 and Fig. 13 for details, in the first winding, the wire inlet slot interior 211 of A31 is in the fourth layer of the first slot 311, and the wire outlet slot interior 212 of A31 is in a fourth layer of the seventh slot 317; the wire inlet slot interior 211 of A32 is in a fourth layer of the second slot 312, and the wire outlet slot interior 212 of A32 is in a fourth layer of the eighth slot 318; the wire inlet slot interior 211 of B31 is in a fourth layer of the third slot 313, and the wire outlet slot interior 212 of B31 is in a fourth layer of a forty-fifth slot 355; the wire inlet slot interior 211 of B32 is in a fourth layer of the fourth slot 314, and the wire outlet slot interior 212 of B32 is in a fourth layer of the forty-sixth slot 356; the wire inlet slot interior 211 of C31 is in a fourth layer of the fifth slot 315, and the wire outlet slot interior 212 of C31 is in a fourth layer of the eleventh slot 321; and the wire inlet slot interior 211 of C32 is in a fourth layer of the sixth slot 316, and the wire outlet slot interior 212 of C32 is in a fourth layer of the twelfth slot 322.

In the second winding, a wire inlet slot interior 211 of A33 is in a fourth layer of the thirteenth slot 323, and a wire outlet slot interior 212 of A33 is in a fourth layer of the eighteenth slot 329; a wire inlet slot interior 211 of A34 is in a fourth layer of the fourteenth slot 324, and a wire outlet slot interior 212 of A34 is in a twentieth layer of the eighth slot 318; a wire inlet slot interior 211 of B33 is in a fourth layer of the fifteenth slot 325, and a wire outlet slot interior 212 of B33 is in a fourth layer of the ninth slot 319; a wire inlet slot interior 211 of B34 is in a fourth layer of the sixteenth slot 326, and a wire outlet slot interior 212 of B34 is in a fourth layer of the tenth slot 320; a wire inlet slot interior 211 of C33 is in a fourth layer of the seventeenth slot 327, and a wire outlet slot interior 212 of C33 is in a fourth layer of the eighteenth slot 328; and a wire inlet slot interior 211 of C34 is in a fourth layer of the twenty-third slot 333, and a wire outlet slot interior 212 of C34 is in a fourth layer of the twenty-fourth slot 334.

When the slot outer ends 213 of the even number layer motor are welded serially, two slot outer ends of each conductor are respectively a wire inlet slot outer end and a wire outlet slot outer end; for the in-phase conductors, a plurality of conductors are sequentially connected, and the wire outlet slot outer end of one of two conductors which are adjacent to each other along the connection direction is welded with the wire inlet slot outer end of the other conductor, the wire inlet slot outer end on the outermost side of the connection direction is connected to a phase terminal, and the wire outlet slot outer end on the outermost side along the connection direction is a neutral point of the phase; except the neutral point and the wire inlet slot outer end connected to the phase terminal, each of the other slot outer ends 213 is welded with the slot out end 213 of another conductor; the slot outer end 213 of another conductor is in a same radial direction as and disposed adjacent to the each of the other slot outer ends 213, and they are in the different layers.

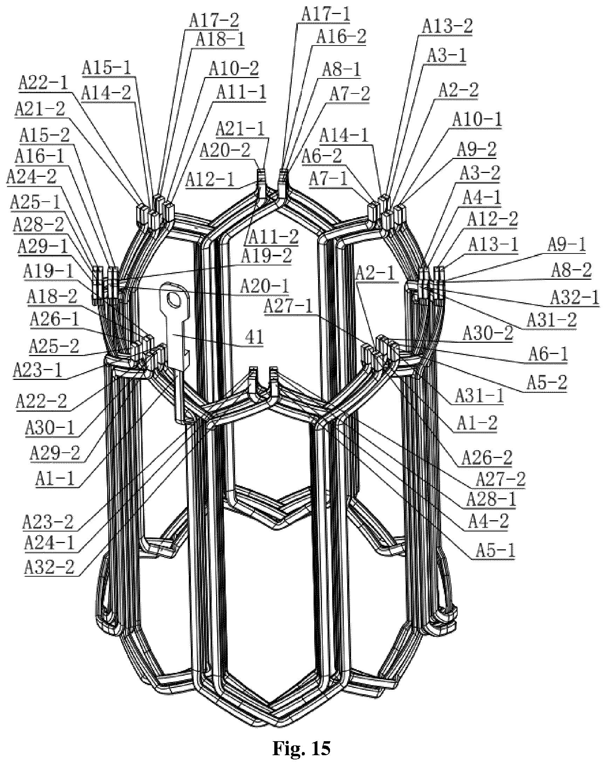

Because serially connecting manners of all the A phase conductors, all the B phase conductors and all the C phase conductors are the same, a detailed description is given below by taking only the serially connecting manners of all the A phase conductors as an example. Referring to Fig. 15, a series welding process of all the A phase conductors is as follows:
the A phase terminal 41 is connected with the wire inlet slot outer end of one conductor, and all the phase A conductors are arranged according to a welding order, Ai, wherein i=1, 2, 3, ..., 32, taking Ai-1 as a wire outlet slot outer end of a single conductor, and taking Ai-2 as a wire outlet slot outer end of a single conductor.

From A1-1 to A1-2, A1-2 is welded to A2-1, from A2-1 to A2-2, A2-2 is welded to A3-1, from A3-1 to A3-2, A3-2 is welded to A4-1, from A4-1 to A4-2, A4-2 is welded to A5-1, from A5-1 to A5-2, A5-2 is welded to A6-1, from A6-1 to A6-2, A6-2 is welded to A7-1, from A7-1 to A7-2, A7-2 is welded to A8-1, from A8-1 to A8-2, A8-2 is welded to A9-1, from A9-1 to A9-2, A9-2 is welded to A10-1; from A10-1 to A10-2, A10-2 is welded to A11-1; from A11-1 to A11-2, A11-2 is welded to A12-1; from A12-1 to A12-2, A12-2 is welded to A13-1; from A13-1 to A13-2, A13-2 is welded to A14-1; from A14-1 to A14-2, A14-2 is welded to A15-1; from A15-1 to A15-2, A15-2 is welded to A16-1; from A16-1 to A17-2, A17-2 is welded to A18-1; from A18-1 to A18-2, A18-2 is welded to A19-1; from A19-1 to A19-2, A19-2 is welded to A20-1, from A20-1 to A20-2, A20-2 is welded to A21-1; from A21-1 to A21-2, A21-2 is welded to A22-1; from A22-1 to A22-2, A22-2 is welded to A23-1; from A23-1 to A23-2, A23-2 is welded to A24-1; from A24-1 to A24-2, A24-2 is welded to A25-1; from A25-1 to A25-2, A25-2 is welded to A26-1; from A26-1 to A26-2, A26-2 is welded to A27-1; from A27-1 to A27-2, A27-2 is welded to A28-1; from A28-1 to A28-2, A28-2 is welded to A29-1; from A29-1 to A29-2, A29-2 is welded to A30-1; from A30-1 to A30-2, A30-2 is welded to A31-1; from A31-1 to A 31-2; A31-2 is welded to A 32-1; and from A32-1 to A 32-2.

All the B phase conductors have B phase terminals 42 and B32-2, and all the C phase conductors have C phase terminals 43 and C32-2. Three points A32-2, B32-2 and C32-2 are connected through the neutral point by using a connector 44, and then the series welding of the even number layer motor is completed. The above welding manner is ultrasonic welding, laser welding or friction stir welding.

In some embodiments of the present disclosure, the slot outer ends 213 are connected by welding and connected through the neutral point by using the connector 44 without using the bus bar, which greatly simplifies a connection of a plurality of slot outer ends 213 of the motor stator, simplifies processing, reduces the production cost, and improves the production efficiency.

Two slot interiors of each conductor in the inner coil unit and the slot outer ends adjacent to corresponding slot interiors are in a same layer, so that the rotor is inserted from an end, equipped with the slot outer end, of the inner coil unit in the stator winding. This end of the rotor winding has no part protruding towards the stator iron core, which will not interfere with an installation of a rotor and will not increase a length of the tooth-like part of the stator iron core, improves an utilization rate of the slot, increases a power density, reduces a volume of the motor stator and reduces a cost of the motor.

Some embodiments of the present disclosure further provide a motor, which includes the motor stator. The motor using the motor stator can reduce the production cost and improve the production efficiency.

### Second Embodiment

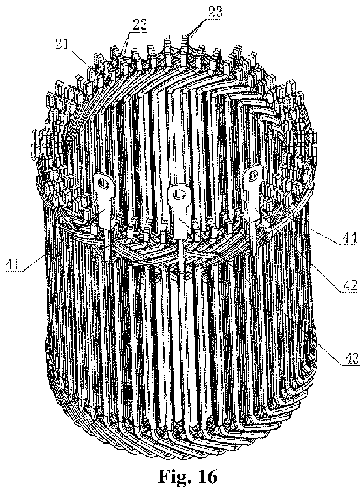

The difference between the second embodiment and the first embodiment is that as shown in Fig. 16, M is an odd number, and this type of motor is called an odd number layer motor. In some embodiments of the present disclosure, M=5, that is, each slot is divided into five layers according to a number of slot interiors that can be accommodated along the radial direction of the stator iron core 1, which are respectively a first layer, a second layer, a third layer, a fourth layer and a fifth layer. Distribution of the inner coil unit 21 and the middle coil unit 22 is a same as the first embodiment, and only a specific distribution rule of the outer coil unit 23 is described in detail below.

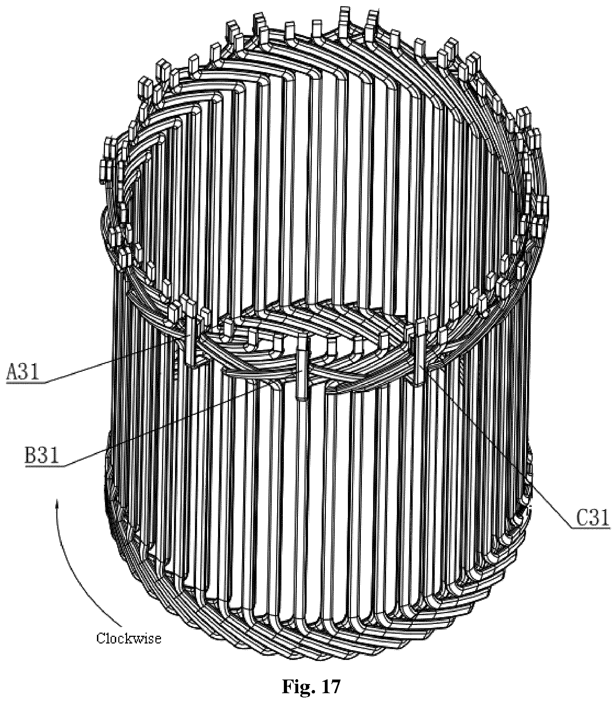

As shown in Fig. 17, two slot interiors of each conductor in the outer coil unit 23 are in two adjacent layers; the slot outer end 213 adjacent to the slot interior close to the middle coil unit 22 is in a same layer as the slot interior, namely the fourth layer; a part of the slot outer end 213 adjacent to the slot interior in an outermost layer is in a same layer as the slot interior, namely the fifth layer; the other slot outer ends 213 adjacent to the slot interior in the outermost layer extend from a layer where the slot interior is to a side away from the central axis of the stator iron core, that is, extend from the fifth layer extends to an outside of the fifth layer. In some embodiments of the present disclosure, a part outside the fifth layer is denoted as a virtual sixth layer.

In some embodiments of the present disclosure, the outer coil unit 23 is made by winding a plurality of first conductors and a plurality of second conductors, that is, the outer coil unit 23 consists of two types of conductors. The inner coil unit 21 and the middle coil unit 22 are made by respectively winding a plurality of first conductors and a plurality of second conductors.

As shown in Fig. 17, in the outer coil unit 23, distribution directions, along the circumferential direction of the stator iron core 1, of the slot outer ends 213 in a same layer are a same, and distribution directions, along the circumferential direction of the stator iron core 1, of the slot outer ends 213 in two adjacent layers are opposite; distribution directions, along the circumferential direction of the stator iron core, of the slot outer ends extending from the outermost layer to a side away from the central axis of the stator iron core are a same, and distribution directions, along the circumferential direction of the stator iron core, of the slot outer ends on the outermost side are opposite. In some embodiments, distribution directions, along the circumferential direction of the stator iron core 1, of the slot outer ends 213 adjacent to the slot interior close to the middle coil unit 22 are a same, that is, each slot outer end 213 in the fourth layer is distributed in a bending manner along the counterclockwise direction (the direction opposite to the clockwise direction in Fig. 17), the slot outer ends 213 in the fifth layer are distributed along the clockwise direction of the stator iron core 1, and the slot outer ends 213 extending from the fifth layer to a side away from the central axis of the stator iron core are distributed along a counterclockwise direction of the stator iron core 1.

A distribution rule of the slot outer turning part 214 of the outer coil unit 23 is the same as a distribution rule of the slot outer turning part 214 of the middle coil unit 22, which will not be described in detail here. Because distribution rules of the A phase conductors, the B phase conductors and the C phase conductors in the outer coil unit 23 are the same, and distribution rules of slots and layers of the slot interiors in the outer coil unit 23 are the same as distribution rules of slots and layers of the slot interiors in the middle coil unit 22, except that two slot interiors of each conductor of the outer coil unit 23 are in the fourth layer and the fifth layer respectively. Taking only the A phase conductor in the outer coil unit 23 as an example, distribution rule of the slot outer end 213 in the outer coil unit 23 is described in detail below.

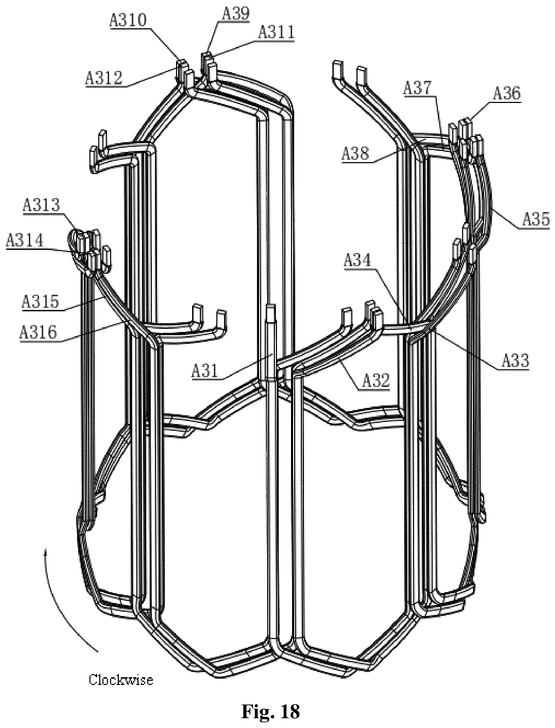

As shown in Fig. 18, two slot outer ends 213 of each conductor are taken as the wire inlet slot outer end 213 and the wire outlet slot outer end 213 respectively; the slot outer end 213 in the outermost layer is selected as the wire inlet slot outer end 213; each conductor of the outer coil unit 23 is denoted as A3j; a wire inlet slot outer end 213 of A3j is denoted as A3j-1, and a wire outlet slot outer end 213 is denoted as A3j-2, wherein j=1, 2, 3, ..., 16.

A31-1 is from the fifth layer to a virtual sixth layer, and is led along the axial direction of the stator iron core. A31-2 is in the fourth layer and extends along a counterclockwise direction (a direction opposite to the clockwise direction in Fig. 18). A32-1 is from the fifth layer to the virtual sixth layer and extends along the counterclockwise direction, and A32-2 is in the fourth layer and extends along the counterclockwise direction. A33-1 is from the fifth layer to the virtual sixth layer and extends along the counterclockwise direction, and A33-2 is in the fourth layer and extends along the counterclockwise direction. A34-1 is in the fifth layer and extends along the clockwise direction, and A34-2 is in the fourth layer and extends along the counterclockwise direction. A35-1 is from the fifth layer to the virtual sixth layer and extends along the counterclockwise direction, and A35-2 is in the fourth layer and extends along the counterclockwise direction. A36-1 is from the fifth layer to the virtual sixth layer and extends along the counterclockwise direction, and A36-2 is in the fourth layer and extends along the counterclockwise direction. A37-1 is in the fifth layer and extends along the clockwise direction (see the clockwise direction in Fig. 18), and A37-2 is in the fourth layer and extends along the counterclockwise direction. A38-1 is in the fifth layer and extends along the clockwise direction, and A38-2 is in the fourth layer and extends along the counterclockwise direction. A39-1 is from the fifth layer to the virtual sixth layer and extends along the counterclockwise direction, and A39-2 is in the fourth layer and extends along the counterclockwise direction. A310-1 is from the fifth layer to the virtual sixth layer and extends along the counterclockwise direction, and A310-2 is in the fourth layer and extends along the counterclockwise direction. A311-1 is in the fifth layer and extends along the clockwise direction, and A311-2 is in the fourth layer and extends along the counterclockwise direction. A312-1 is in the fifth layer and extends along the clockwise direction, and A312-2 is in the fourth layer and extends along the counterclockwise direction. A313-1 is from the fifth layer to the virtual sixth layer and extends along the counterclockwise direction, and A313-2 is in the fourth layer and extends along the counterclockwise direction. A314-1 is from the fifth layer to the virtual sixth layer and extends along the counterclockwise direction, and A314-2 is in the fourth layer and extends along the counterclockwise direction. A315-1 is in the fifth layer and extends along the clockwise direction, and A315-2 is in the fourth layer and extends along the counterclockwise direction. A316-1 is in the fifth layer and extends along the clockwise direction, and A316-2 is in the fourth layer and extends along the counterclockwise direction.

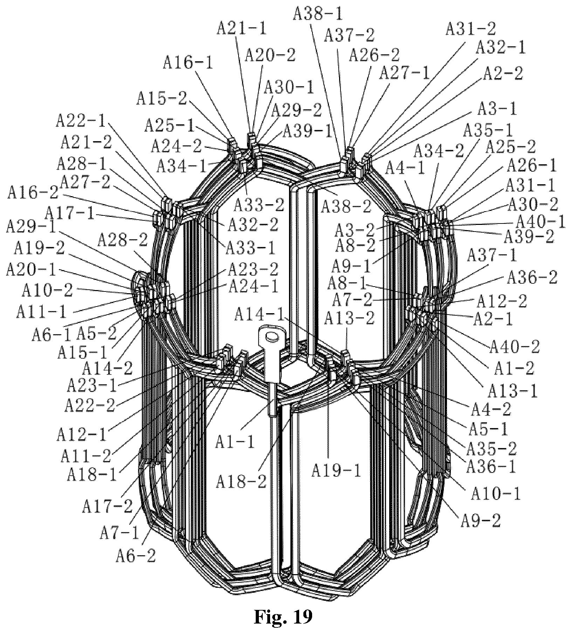

When the slot outer ends 213 of the odd number layer motor are welded serially, its welding rule is a same as a welding rule of the slot outer ends 213 of the even number layer motor. A series welding process of all the A phase conductors is as follows:
as shown in Fig. 19, the A phase terminal 41 is connected to the wire inlet slot outer end of one conductor, and all the A phase conductors are arranged according to a welding order, Aa, wherein a=1, 2, 3, ..., 40, taking Aa-1 as the wire outlet slot outer end of a single conductor, and taking Aa-2 as the wire outlet slot outer end of a single conductor.

From A1-1 to A1-2, A1-2 is connected to A2-1, from A2-1 to A2-2, A2-2 is connected to A3-1, from A3-1 to A3-2, A3-2 is connected to A4-1, from A4-1 to A4-2, A4-2 is connected to A5-1, from A5-1 to A5-2, A5-2 is connected to A6-1, from A6-1 to A6-2, A6-2 is connected to A7-1, from A7-1 to A7-2, A7-2 is connected to A8-1, from A8-1 to A8-2, A8-2 is connected to A9-1, from A9-1 to A9-2, A9-2 is connected to A10-1; from A10-1 to A10-2, A10-2 is connected to A11-1; from A11-1 to A11-2, A11-2 is connected to A12-1; from A12-1 to A12-2, A12-2 is connected to A13-1; from A13-1 to A13-2, A13-2 is connected to A14-1; from A14-1 to A14-2, A14-2 is connected to A15-1; from A15-1 to A15-2, A15-2 is connected to A16-1; from A16-1 to A16-2, A16-2 is connected to A17-1; from A17-1 to A17-2, A17-2 is connected to A18-1; from A18-1 to A18-2, A18-2 is connected to A19-1; from A19-1 to A19-2, A19-2 is connected to A20-1, from A20-1 to A20-2, A20-2 is connected to A21-1, from A21-1 to A21-2, A21-2 is connected to A22-1, from A22-1 to A22-2, A22-2 is connected to A23-1, from A23-1 to A23-2; from A23-2 is connected to A24-1; from A24-1 to A24-2, A24-2 is connected to A25-1; from A25-1 to A25-2, A25-2 is connected to A26-1; from A26-1 to A26-2, A26-2 is connected to A27-1; from A27-1 to A27-2, A27-2 is connected to A28-1; from A28-1 to A28-2, A28-2 is connected to A29-1; from A29-1 to A29-2, A29-2 is connected to A30-1; from A30-1 to A30-2, A30-2 is connected to A31-1; from A31-1 to A 31-2, A31-2 is connected to A 32-1; from A32-1 to A 32-2, A32-2 is connected to A 33-1; from A33-1 to A 33-2, A33-2 is connected to A 34-1; from A34-1 to A 34-2, A34-2 is connected to A 35-1; from A35-1 to A 35-2, A35-2 is connected to A 36-1; from A36-1 to A 36-2, A36-2 is connected to A 37-1; from A37-1 to A 37-2, A37-2 is connected to A 38-1; from A38-1 to A 38-2, A38-2 is connected to A 39-1; from A39-1 to A 39-2, A39-2 is connected to A 40-1; from A40-1 to A 40-2.

All the B phase conductors have B phase terminals 42 and B40-2, and all the C phase conductors have C phase terminals 43 and C40-2. The three points A40-2, B40-2 and C40-2 are connected through the neutral point by using the connector 44, and then the series welding of the odd number layer motor is completed.

### Third Embodiment

In some embodiments of the present disclosure, the first coil unit, the second coil unit and the third coil unit are the outer coil unit, the middle coil unit and the inner coil unit respectively, that is, a pitch of the outermost coil unit is less than a pitch of the stator winding, and pitches of other coil units are equal to the pitch of the stator winding. Moreover, for the even number layer motor, winding manners of the inner coil unit, the middle coil unit and the outer coil unit are respectively a same as winding manners of the outer coil unit, the middle coil unit and the inner coil unit in the first embodiment, and will not be repeated here.

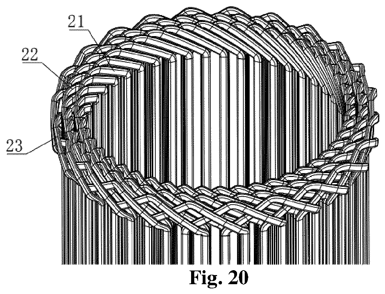

For the odd number layer motor, as shown in Fig. 20, the middle coil unit has a same structure as that of the middle coil unit in the second embodiment, the outer coil unit has the same structure as the inner coil unit in the second embodiment, and a difference is that: distribution rules of layers of the slot outer turning parts are different.

In some embodiments, in the outer coil unit, the second extending part 2143 is on the side, far away from the central axis of the stator iron core 1, of a layer where the first extending part 2141 is, and both the turning part 2142 and the bending part 2144 are partly on a side, far away from the central axis of the stator iron core 1, of a layer where the first extending part 2141 is, and partly in a layer where the first extending part 2141 is, so that a part of the whole slot outer turning part 214 is in the fifth layer, and the other part of the whole slot outer turning part 214 if convexly disposed towards the side far away from the central axis of the stator iron core 1, this position is called a virtual sixth layer.

Because each slot outer turning part of the outer coil unit 23 has a same structure, its position is determined according to a corresponding slot interior. Only a distribution of the slot outer turning part corresponding to A31 is elaborated below. For example, the wire inlet slot interior 211 of A31 is in the fifth layer of the first slot 311, the first extending part 2141 connected with the wire inlet slot interior of A31 is in the fifth layer, the turning part 2142 crosses over into the virtual sixth layer from the fifth layer, the second extending part 2143 is in the virtual sixth layer, and the bending part 2144 crosses over into the fifth layer from the virtual sixth layer, and then is connected with the wire outlet slot interior 212 of A31.

In some embodiments of the present disclosure, the inner coil unit has a same structure as the outer coil unit in the second embodiment, and a difference is that: a part of the slot outer end extends from the first layer to the side close to the central axis of the stator iron core.

In some embodiments of the present disclosure, two slot interiors of each conductor in the outer coil unit 23 are in two adjacent layers; the slot outer end 213 connected with the slot interior close to the middle coil unit 23 is in a same layer as a slot interior, namely the second layer; a part of the slot outer end 213 connected with the slot interior in an innermost layer is in a same layer as the slot interior, namely the first layer; the other slot outer ends 213 connected with the slot interior in the innermost layer extend from a layer where the slot interior is to the side close the central axis of the stator iron core. In some embodiments of the present disclosure, a part inside the first layer is denoted as the virtual zero layer.

For which slot outer ends in the first layer extends from the first layer to the virtual zero layer, distribution rule of the slot outer ends is a same as that of the slot outer ends extending from the fifth layer to the virtual sixth layer which are selected by the outer coil unit in the second embodiment, and will not be limited repeatedly here.

Both the above two solutions can realize that: the slot outer ends are connected only by welding and connected through the neutral point by using the connector without using the bus bar, which greatly simplifies the connection of a plurality of slot outer ends of the motor stator, simplifies processing, reduces the production cost, and improves the production efficiency.

Both the clockwise direction and the counterclockwise direction mentioned in specific implementation modes of the present disclosure refer to the directions shown in the specific accompanying drawings. In some embodiments of the present disclosure, number of slots per pole and per phase=number of slots of stator, number of poles of motor, or number of phases, and pole pitch=number of slots of stator, or **number of** poles of motor=number of slots per pole and per phase ×number of phases, wherein a number of slots is not limited to 48, but can be any number; for example, if the number of slots per pole and per phase is 2, a corresponding three-phase motor has 36 slots and 6 poles, 48 slots and 8 poles, 60 slots and 10 poles, 72 slots and 12 poles, 96 slots and 16 poles, etc, and the pole pitch is 6; if the number of slots per pole and per phase is 3, the corresponding three-phase motor has 54 slots and 6 poles, 72 slots and 8 poles, 90 slots and 12 poles, 108 slots and 12 poles, 144 slots and 16 poles, etc, which will not be limited here. Both the wire inlet slot interior and the wire outlet slot interior in some embodiments of the present disclosure do not represent the direction of current, but only to distinguish two slot interiors of each conductor.

It is apparent that the above embodiments are only examples for clear description and not intended to limit the implementation modes of the present disclosure. Those of ordinary skill in the art further make variations or modifications of other different forms on the basis of the above descriptions. It is unnecessary and impossible to exhaust all of the implementation modes herein.

## Claims

1. A motor stator, comprising a stator iron core (1); a plurality of slots are disposed on the stator iron core (1) and extended along an axial direction of the stator iron core (1), and the plurality of slots are distributed along a circumferential direction of the stator iron core (1); wherein, the motor stator further comprises:
a stator winding (2), which comprising a plurality of coil units, the plurality of coil units comprising a first coil unit and a third coil unit sequentially distributed along a radial direction of the stator iron core (1), each of the plurality of coil units comprising a plurality of conductors, and each of the plurality of conductors comprising two slot interiors for insertion in different slots of the plurality of slots;
wherein each of the plurality of slots is divided into M layers according to a number of the slot interiors which can be accommodated by the each of the plurality of slots along the radial direction of the stator iron core (1), M is an integer greater than or equal to 3, and two slot interiors of each of the plurality of conductors in the first coil unit is in a same layer of two slots;
a pitch of the first coil unit in the plurality of coil units is less than a pole pitch of the stator winding (2), and a pitch of other coil unit in the plurality of coil units is equal to the pole pitch of the stator winding (2);
**characterised in that**:
when M is an even number, the two slot interiors of each of the plurality of conductors in the third coil unit are in a same layer of two slots; and
when M is an odd number, the two slot interiors of each of the plurality of conductors in the third coil unit are in adjacent two layers of two slots.

2. The motor stator as claimed in claim 1, wherein each of the plurality of coil units comprises a plurality of windings, wherein, each of the plurality of windings comprises three groups of phase conductors, at least two conductors disposed adjacent to each other form a group of phase conductors, and two slot interiors of each of the plurality of conductors are respectively a wire inlet slot interior (211) and a wire outlet slot interior (212); the each of the plurality of conductors further comprises a slot outer turning part (214) which is connected with the two slot interiors and forms a U-shaped structure with the two slot interiors, and two slot outer ends (213) which are respectively connected with the two slot interiors; each of the two slot outer ends (213) extends along the circumferential direction of the stator iron core (1).

3. The motor stator as claimed in claim 2, wherein, in each group of phase conductors of the first coil unit, a distribution direction, along the circumferential direction of the stator iron core (1), of a wire inlet slot interior (211) and a wire outlet slot interior (212) in each conductor is opposite to a distribution direction, along the circumferential direction of the stator iron core (1), of a wire inlet slot interior (211) and a wire outlet slot interior (212) of a conductor adjacent to the each conductor.

4. The motor stator as claimed in claim 2, wherein, the plurality of coil units further comprise a second coil unit located between the first coil unit and the third coil unit; in each of the plurality of windings of the second coil unit, distribution directions, along the circumferential direction of the stator iron core (1), of wire inlet slot interiors (211) and wire outlet slot interiors (212) of conductors are a same.

5. The motor stator as claimed in claim 2, wherein, in coil units of the plurality of coil units except the third coil unit, each slot outer end (213) of each conductor is in a same layer of the plurality of slots as the slot interior adjacent to the each outer end (213) of each conductor.

6. The motor stator as claimed in claim 2, wherein, distribution directions, along the circumferential direction of the stator iron core (1), of the slot outer ends (213) in a same layer of the plurality of slots are a same, and distribution directions, along the circumferential direction of the stator iron core (1), of the two slot outer ends (213) in adjacent two layers of the plurality of slots are opposite.

7. The motor stator as claimed in claim 4, wherein, two slot interiors of each of the plurality of conductors in the second coil unit are in adjacent two layers of two slots.

8. The motor stator as claimed in claim 2, wherein, when M is an even number, in the third coil unit, along the circumferential direction of the stator iron core (1), in each winding, a distribution direction of wire inlet slot interiors (211) and wire outlet slot interiors (212) in one group of phase conductor and a distribution direction of a wire inlet slot interiors (211) and a wire outlet slot interiors (212) in another group of phase conductor adjacent to the one group of phase conductor are opposite or a same; and
when M is an odd number, in the third coil unit, along the circumferential direction of the stator iron core (1), in each winding, a distribution direction of wire inlet slot interiors (211) and wire outlet slot interiors (212) in one group of phase conductor and a distribution direction of wire inlet slot interiors (211) and wire outlet slot interiors (212) in another group of phase conductor adjacent to the one group of phase conductor are a same.

9. The motor stator as claimed in claim 4, wherein, when M is an even number, the slot outer end (213) of each of the plurality of conductors in the third coil unit is in a same layer of the plurality of slots as the slot interior adjacent to it;
when M is an odd number, in the third coil unit, the slot outer end (213) adjacent to the slot interior which is close to the second coil unit is in a same layer of the plurality of slots as the slot interior; when the third coil unit is an outer coil unit, a part of the slot outer ends (213) which are adjacent to the slot interior in an outermost layer is in a same layer as the slot interior, and other part of the slot outer ends (213) adjacent to the slot interior in the outermost layer extend from a layer where the slot interior in the outermost layer is to a side which is far away from a central axis of the stator iron core (1); when the third coil unit is an inner coil unit, a part of the slot outer ends (213) adjacent to the slot interior in an innermost layer are in a same layer as the slot interior in the innermost layer, and other part of the slot outer ends (213) adjacent to the slot interior in the innermost layer extend from a layer where the slot interior in the innermost layer is to a side which is close to the central axis of the stator iron core (1).

10. The motor stator as claimed in claim 9, wherein, when M is an even number, distribution directions, along the circumferential direction of the stator iron core (1), of slot outer ends (213) of the third coil unit are a same;
when M is an odd number, in the third coil unit, distribution directions, along the circumferential direction of the stator iron core (1), of the slot outer ends (213) in same layers of the plurality of the slots are a same, and distribution directions, along the circumferential direction of the stator iron core (1), of the slot outer ends (213) in adjacent two layers are opposite; when the third coil unit is an outer coil unit, distribution directions, along the circumferential direction of the stator iron core (1), of the slot outer ends (213) extending from the outermost layer to the side far away from the central axis of the stator iron core (1) are a same, and are opposite to distribution directions, along the circumferential direction of the stator iron core (1), of the slot outer ends (213) in an outermost layer; when the third coil unit is the inner coil unit, in the third coil unit, distribution directions, along the circumferential direction of the stator iron core (1), of the slot outer ends (213) extending from the innermost layer to the side close to the central axis of the stator iron core (1) are a same, and are opposite to distribution directions, along the circumferential direction of the stator iron core (1), of the slot outer ends (213) in the innermost layer.

11. The motor stator as claimed in any one of claims 2 to 10, wherein, two slot outer ends (213) of each conductor are respectively a wire inlet slot outer end and a wire outlet slot outer end;
when the third coil unit is an outer coil unit, for in-phase conductors, a plurality of conductors are sequentially connected, and a wire outlet slot outer end of one conductor in two conductors which are adjacent to each other along a connection direction is welded with a wire inlet slot outer end of the other conductor in the two conductors, a wire inlet slot outer end on an outermost side along the connection direction is connected with a phase terminal, and a wire outlet slot outer end on the outermost side along the connection direction is a neutral point of the phase; except the neutral point and the wire inlet slot outer end connected with the phase terminal, each of the slot outer ends (213) of one conductor is welded with a slot outer end (213) of another conductor, wherein the slot outer end (213) of another conductor is in a same radial direction as and disposed adjacent to the each of the slot outer ends (213) of one conductor, and they are in different layers;
when the third coil unit is an inner coil unit, for in-phase conductors, a plurality of conductors are sequentially connected, and a wire outlet slot outer end of one conductor of two conductors which are adjacent to each other along a connection direction is welded with a wire inlet slot outer end of the other conductor of the two conductors, a wire inlet slot outer end on an innermost side along the connection direction is connected with a phase terminal, and a wire outlet slot outer end on an innermost side along the connection direction is a neutral point of the phase; except the neutral point and the wire inlet slot outer end connected to the phase terminal, each of slot outer ends (213) of one conductor is welded with a slot outer end (213) of another conductor, wherein the slot outer end (213) of another conductor is in a same radial direction as and disposed adjacent to the each of the slot outer ends (213) of one conductor, and they are in different layers.

12. A motor, comprising the motor stator as claimed in any one of claims 1 to 11.

## Patentansprüche

1. Motorstator, umfassend einen Statoreisenkern (1); eine Vielzahl von Nuten ist an dem Statoreisenkern (1) angeordnet und erstreckt sich entlang einer Axialrichtung des Statoreisenkerns (1), und die Vielzahl von Nuten ist entlang einer Umfangsrichtung des Statoreisenkerns (1) verteilt; wobei der Motorstator ferner umfasst:
eine Statorwicklung (2), die eine Vielzahl von Spuleneinheiten umfasst, wobei die Vielzahl von Spuleneinheiten eine erste Spuleneinheit und eine dritte Spuleneinheit umfasst, die nacheinander entlang einer Radialrichtung des Statoreisenkerns (1) verteilt sind, wobei jede der Vielzahl von Spuleneinheiten eine Vielzahl von Leitern umfasst und jeder der Vielzahl von Leitern zwei Nutinnenabschnitte zum Einführen in unterschiedliche Nuten der Vielzahl von Nuten umfasst;
wobei jede der Vielzahl von Nuten entsprechend einer Anzahl der Nutinnenabschnitte, die von jeder der Vielzahl von Nuten entlang der Radialrichtung des Statoreisenkerns (1) aufgenommen werden können, in M Schichten unterteilt ist, wobei M eine ganze Zahl größer oder gleich 3 ist und sich die zwei Nutinnenabschnitte jedes der Vielzahl von Leitern in der ersten Spuleneinheit in derselben Schicht von zwei Nuten befinden;
wobei eine Spulenteilung der ersten Spuleneinheit der Vielzahl von Spuleneinheiten kleiner als eine Polteilung der Statorwicklung (2) ist und eine Spulenteilung der übrigen Spuleneinheiten der Vielzahl von Spuleneinheiten gleich der Polteilung der Statorwicklung (2) ist;
**dadurch gekennzeichnet, dass**:
wenn M eine gerade Zahl ist, sich die zwei Nutinnenabschnitte jedes der Vielzahl von Leitern in der dritten Spuleneinheit in derselben Schicht von zwei Nuten befinden; und
wenn M eine ungerade Zahl ist, sich die zwei Nutinnenabschnitte jedes der Vielzahl von Leitern in der dritten Spuleneinheit in zwei benachbarten Schichten von zwei Nuten befinden.

2. Motorstator nach Anspruch 1, wobei jede der Vielzahl von Spuleneinheiten eine Vielzahl von Wicklungen umfasst, wobei jede der Vielzahl von Wicklungen drei Gruppen von Phasenleitern umfasst, wobei mindestens zwei benachbart zueinander angeordnete Leiter eine Gruppe von Phasenleitern bilden und die zwei Nutinnenabschnitte jedes der Vielzahl von Leitern jeweils ein Nutinnenabschnitt für den Drahteintritt (211) und ein Nutinnenabschnitt für den Drahtaustritt (212) sind; wobei jeder der Vielzahl von Leitern ferner einen außerhalb der Nut liegenden Umkehrabschnitt (214) umfasst, der mit den zwei Nutinnenabschnitten verbunden ist und zusammen mit den zwei Nutinnenabschnitten eine U-förmige Struktur bildet, sowie zwei Nutaußenenden (213), die jeweils mit den zwei Nutinnenabschnitten verbunden sind; wobei sich jedes der zwei Nutaußenenden (213) entlang der Umfangsrichtung des Statoreisenkerns (1) erstreckt.

3. Motorstator nach Anspruch 2, wobei in jeder Gruppe von Phasenleitern der ersten Spuleneinheit eine Verteilungsrichtung eines Nutinnenabschnitts für den Drahteintritt (211) und eines Nutinnenabschnitts für den Drahtaustritt (212) in jedem Leiter entlang der Umfangsrichtung des Statoreisenkerns (1) einer Verteilungsrichtung eines Nutinnenabschnitts für den Drahteintritt (211) und eines Nutinnenabschnitts für den Drahtaustritt (212) eines zu dem jeweiligen Leiter benachbarten Leiters entlang der Umfangsrichtung des Statoreisenkerns (1) entgegengesetzt ist.

4. Motorstator nach Anspruch 2, wobei die Vielzahl von Spuleneinheiten ferner eine zweite Spuleneinheit umfasst, die zwischen der ersten Spuleneinheit und der dritten Spuleneinheit angeordnet ist; wobei in jeder der Vielzahl von Wicklungen der zweiten Spuleneinheit die Verteilungsrichtungen der Nutinnenabschnitte für den Drahteintritt (211) und der Nutinnenabschnitte für den Drahtaustritt (212) der Leiter entlang der Umfangsrichtung des Statoreisenkerns (1) gleich sind.

5. Motorstator nach Anspruch 2, wobei in den Spuleneinheiten der Vielzahl von Spuleneinheiten mit Ausnahme der dritten Spuleneinheit sich jedes Nutaußenende (213) jedes Leiters in derselben Schicht der Vielzahl von Nuten befindet wie der dem jeweiligen Nutaußenende (213) jedes Leiters benachbarte Nutinnenabschnitt.

6. Motorstator nach Anspruch 2, wobei die Verteilungsrichtungen der Nutaußenenden (213) in derselben Schicht der Vielzahl von Nuten entlang der Umfangsrichtung des Statoreisenkerns (1) gleich sind und die Verteilungsrichtungen der zwei Nutaußenenden (213) in zwei benachbarten Schichten der Vielzahl von Nuten entlang der Umfangsrichtung des Statoreisenkerns (1) entgegengesetzt sind.

7. Motorstator nach Anspruch 4, wobei sich die zwei Nutinnenabschnitte jedes der Vielzahl von Leitern in der zweiten Spuleneinheit in zwei benachbarten Schichten von zwei Nuten befinden.

8. Motorstator nach Anspruch 2, wobei, wenn M eine gerade Zahl ist, in der dritten Spuleneinheit entlang der Umfangsrichtung des Statoreisenkerns (1) in jeder Wicklung eine Verteilungsrichtung der Nutinnenabschnitte für den Drahteintritt (211) und der Nutinnenabschnitte für den Drahtaustritt (212) einer Gruppe von Phasenleitern und eine Verteilungsrichtung der Nutinnenabschnitte für den Drahteintritt (211) und der Nutinnenabschnitte für den Drahtaustritt (212) einer anderen Gruppe von Phasenleitern, die zu der einen Gruppe von Phasenleitern benachbart ist, entgegengesetzt oder gleich sind; und
wenn M eine ungerade Zahl ist, in der dritten Spuleneinheit entlang der Umfangsrichtung des Statoreisenkerns (1) in jeder Wicklung eine Verteilungsrichtung der Nutinnenabschnitte für den Drahteintritt (211) und der Nutinnenabschnitte für den Drahtaustritt (212) einer Gruppe von Phasenleitern und eine Verteilungsrichtung der Nutinnenabschnitte für den Drahteintritt (211) und der Nutinnenabschnitte für den Drahtaustritt (212) einer anderen Gruppe von Phasenleitern, die zu der einen Gruppe von Phasenleitern benachbart ist, gleich sind.

9. Motorstator nach Anspruch 4, wobei, wenn M eine gerade Zahl ist, sich das Nutaußenende (213) jedes der Vielzahl von Leitern in der dritten Spuleneinheit in derselben Schicht der Vielzahl von Nuten befindet wie der diesem benachbarte Nutinnenabschnitt;
wenn M eine ungerade Zahl ist, sich in der dritten Spuleneinheit das Nutaußenende (213), das dem Nutinnenabschnitt benachbart ist, der der zweiten Spuleneinheit nahe ist, in derselben Schicht der Vielzahl von Nuten befindet wie der Nutinnenabschnitt; wenn die dritte Spuleneinheit eine äußere Spuleneinheit ist, befindet sich ein Teil der Nutaußenenden (213), die dem Nutinnenabschnitt in einer äußersten Schicht benachbart sind, in derselben Schicht wie der Nutinnenabschnitt, und ein anderer Teil der Nutaußenenden (213), die dem Nutinnenabschnitt in der äußersten Schicht benachbart sind, erstreckt sich von einer Schicht, in der sich der Nutinnenabschnitt in der äußersten Schicht befindet, zu einer von einer Mittelachse des Statoreisenkerns (1) entfernten Seite; wenn die dritte Spuleneinheit eine innere Spuleneinheit ist, befindet sich ein Teil der Nutaußenenden (213), die dem Nutinnenabschnitt in einer innersten Schicht benachbart sind, in derselben Schicht wie der Nutinnenabschnitt in der innersten Schicht, und ein anderer Teil der Nutaußenenden (213), die dem Nutinnenabschnitt in der innersten Schicht benachbart sind, erstreckt sich von einer Schicht, in der sich der Nutinnenabschnitt in der innersten Schicht befindet, zu einer Seite, die der Mittelachse des Statoreisenkerns (1) nahe ist.

10. Motorstator nach Anspruch 9, wobei, wenn M eine gerade Zahl ist, die Verteilungsrichtungen der Nutaußenenden (213) der dritten Spuleneinheit entlang der Umfangsrichtung des Statoreisenkerns (1) gleich sind;
wenn M eine ungerade Zahl ist, in der dritten Spuleneinheit die Verteilungsrichtungen der Nutaußenenden (213) in denselben Schichten der Vielzahl von Nuten entlang der Umfangsrichtung des Statoreisenkerns (1) gleich sind und die Verteilungsrichtungen der Nutaußenenden (213) in zwei benachbarten Schichten entlang der Umfangsrichtung des Statoreisenkerns (1) entgegengesetzt sind; wenn die dritte Spuleneinheit eine äußere Spuleneinheit ist, sind die Verteilungsrichtungen der Nutaußenenden (213), die sich von der äußersten Schicht zu der von der Mittelachse des Statoreisenkerns (1) entfernten Seite erstrecken, entlang der Umfangsrichtung des Statoreisenkerns (1) gleich und den Verteilungsrichtungen der Nutaußenenden (213) in der äußersten Schicht entlang der Umfangsrichtung des Statoreisenkerns (1) entgegengesetzt; wenn die dritte Spuleneinheit eine innere Spuleneinheit ist, sind in der dritten Spuleneinheit die Verteilungsrichtungen der Nutaußenenden (213), die sich von der innersten Schicht zu der der Mittelachse des Statoreisenkerns (1) nahen Seite erstrecken, entlang der Umfangsrichtung des Statoreisenkerns (1) gleich und den Verteilungsrichtungen der Nutaußenenden (213) in der innersten Schicht entlang der Umfangsrichtung des Statoreisenkerns (1) entgegengesetzt.

11. Motorstator nach einem der Ansprüche 2 bis 10, wobei die zwei Nutaußenenden (213) jedes Leiters jeweils ein Nutaußenende für den Drahteintritt und ein Nutaußenende für den Drahtaustritt sind;
wenn die dritte Spuleneinheit eine äußere Spuleneinheit ist, wird bei gleichphasigen Leitern eine Vielzahl von Leitern nacheinander verbunden, und ein Nutaußenende für den Drahtaustritt eines Leiters von zwei Leitern, die entlang einer Verbindungsrichtung benachbart zueinander sind, wird mit einem Nutaußenende für den Drahteintritt des anderen Leiters der zwei Leiter verschweißt, ein Nutaußenende für den Drahteintritt an einer entlang der Verbindungsrichtung äußersten Seite ist mit einem Phasenanschluss verbunden, und ein Nutaußenende für den Drahtaustritt an der entlang der Verbindungsrichtung äußersten Seite ist ein Neutralpunkt der Phase; mit Ausnahme des Neutralpunkts und des mit dem Phasenanschluss verbundenen Nutaußenendes für den Drahteintritt wird jedes der Nutaußenenden (213) eines Leiters mit einem Nutaußenende (213) eines anderen Leiters verschweißt, wobei sich das Nutaußenende (213) des anderen Leiters in derselben Radialrichtung befindet und benachbart zu jedem der Nutaußenenden (213) des einen Leiters angeordnet ist, und sie sich in unterschiedlichen Schichten befinden;
wenn die dritte Spuleneinheit eine innere Spuleneinheit ist, wird bei gleichphasigen Leitern eine Vielzahl von Leitern nacheinander verbunden, und ein Nutaußenende für den Drahtaustritt eines Leiters von zwei Leitern, die entlang einer Verbindungsrichtung benachbart zueinander sind, wird mit einem Nutaußenende für den Drahteintritt des anderen Leiters der zwei Leiter verschweißt, ein Nutaußenende für den Drahteintritt an einer entlang der Verbindungsrichtung innersten Seite ist mit einem Phasenanschluss verbunden, und ein Nutaußenende für den Drahtaustritt an der entlang der Verbindungsrichtung innersten Seite ist ein Neutralpunkt der Phase; mit Ausnahme des Neutralpunkts und des mit dem Phasenanschluss verbundenen Nutaußenendes für den Drahteintritt wird jedes der Nutaußenenden (213) eines Leiters mit einem Nutaußenende (213) eines anderen Leiters verschweißt, wobei sich das Nutaußenende (213) des anderen Leiters in derselben Radialrichtung befindet und benachbart zu jedem der Nutaußenenden (213) des einen Leiters angeordnet ist, und sie sich in unterschiedlichen Schichten befinden.

12. Motor, umfassend den Motorstator nach einem der Ansprüche 1 bis 11.

## Revendications

1. Stator de moteur, comprenant un noyau de fer du stator (1) ; une pluralité d'encoches est disposée sur le noyau de fer du stator (1) et s'étend selon une direction axiale du noyau de fer du stator (1), et la pluralité d'encoches est répartie selon une direction circonférentielle du noyau de fer du stator (1) ; dans lequel le stator de moteur comprend en outre :
un enroulement de stator (2), qui comprend une pluralité d'unités de bobine, la pluralité d'unités de bobine comprenant une première unité de bobine et une troisième unité de bobine réparties séquentiellement selon une direction radiale du noyau de fer du stator (1), chacune de la pluralité d'unités de bobine comprenant une pluralité de conducteurs, et chacun de la pluralité de conducteurs comprenant deux parties intérieures d'encoche destinées à être insérées dans des encoches différentes de la pluralité d'encoches ;
dans lequel chacune de la pluralité d'encoches est divisée en M couches en fonction d'un nombre des parties intérieures d'encoche pouvant être logées par chacune de la pluralité d'encoches selon la direction radiale du noyau de fer du stator (1), M étant un entier supérieur ou égal à 3, et les deux parties intérieures d'encoche de chacun de la pluralité de conducteurs dans la première unité de bobine sont dans une même couche de deux encoches ;
un pas de la première unité de bobine de la pluralité d'unités de bobine est inférieur à un pas polaire de l'enroulement de stator (2), et un pas des autres unités de bobine de la pluralité d'unités de bobine est égal au pas polaire de l'enroulement de stator (2) ;
**caractérisé en ce que** :
lorsque M est un nombre pair, les deux parties intérieures d'encoche de chacun de la pluralité de conducteurs dans la troisième unité de bobine sont dans une même couche de deux encoches ; et
lorsque M est un nombre impair, les deux parties intérieures d'encoche de chacun de la pluralité de conducteurs dans la troisième unité de bobine sont dans deux couches adjacentes de deux encoches.

2. Stator de moteur selon la revendication 1, dans lequel chacune de la pluralité d'unités de bobine comprend une pluralité d'enroulements, dans lequel chacun de la pluralité d'enroulements comprend trois groupes de conducteurs de phase, au moins deux conducteurs disposés de manière adjacente l'un à l'autre formant un groupe de conducteurs de phase, et les deux parties intérieures d'encoche de chacun de la pluralité de conducteurs étant respectivement une partie intérieure d'encoche d'entrée de fil (211) et une partie intérieure d'encoche de sortie de fil (212) ; chacun de la pluralité de conducteurs comprend en outre une partie de retournement d'encoche (214) qui est reliée aux deux parties intérieures d'encoche et forme une structure en U avec les deux parties intérieures d'encoche, et deux extrémités extérieures d'encoche (213) qui sont respectivement reliées aux deux parties intérieures d'encoche ; chacune des deux extrémités extérieures d'encoche (213) s'étend selon la direction circonférentielle du noyau de fer du stator (1).

3. Stator de moteur selon la revendication 2, dans lequel, dans chaque groupe de conducteurs de phase de la première unité de bobine, une direction de répartition, selon la direction circonférentielle du noyau de fer du stator (1), d'une partie intérieure d'encoche d'entrée de fil (211) et d'une partie intérieure d'encoche de sortie de fil (212) dans chaque conducteur est opposée à une direction de répartition, selon la direction circonférentielle du noyau de fer du stator (1), d'une partie intérieure d'encoche d'entrée de fil (211) et d'une partie intérieure d'encoche de sortie de fil (212) d'un conducteur adjacent audit conducteur.

4. Stator de moteur selon la revendication 2, dans lequel la pluralité d'unités de bobine comprend en outre une deuxième unité de bobine située entre la première unité de bobine et la troisième unité de bobine ; dans chacun de la pluralité d'enroulements de la deuxième unité de bobine, les directions de répartition, selon la direction circonférentielle du noyau de fer du stator (1), des parties intérieures d'encoche d'entrée de fil (211) et des parties intérieures d'encoche de sortie de fil (212) des conducteurs sont identiques.

5. Stator de moteur selon la revendication 2, dans lequel, dans les unités de bobine de la pluralité d'unités de bobine à l'exception de la troisième unité de bobine, chaque extrémité extérieure d'encoche (213) de chaque conducteur est dans une même couche de la pluralité d'encoches que la partie intérieure d'encoche adjacente à ladite extrémité extérieure d'encoche (213) de chaque conducteur.

6. Stator de moteur selon la revendication 2, dans lequel les directions de répartition, selon la direction circonférentielle du noyau de fer du stator (1), des extrémités extérieures d'encoche (213) dans une même couche de la pluralité d'encoches sont identiques, et les directions de répartition, selon la direction circonférentielle du noyau de fer du stator (1), des deux extrémités extérieures d'encoche (213) dans deux couches adjacentes de la pluralité d'encoches sont opposées.

7. Stator de moteur selon la revendication 4, dans lequel les deux parties intérieures d'encoche de chacun de la pluralité de conducteurs dans la deuxième unité de bobine sont dans deux couches adjacentes de deux encoches.

8. Stator de moteur selon la revendication 2, dans lequel, lorsque M est un nombre pair, dans la troisième unité de bobine, selon la direction circonférentielle du noyau de fer du stator (1), dans chaque enroulement, une direction de répartition des parties intérieures d'encoche d'entrée de fil (211) et des parties intérieures d'encoche de sortie de fil (212) dans un groupe de conducteurs de phase et une direction de répartition des parties intérieures d'encoche d'entrée de fil (211) et des parties intérieures d'encoche de sortie de fil (212) dans un autre groupe de conducteurs de phase adjacent audit groupe de conducteurs de phase sont opposées ou identiques ; et
lorsque M est un nombre impair, dans la troisième unité de bobine, selon la direction circonférentielle du noyau de fer du stator (1), dans chaque enroulement, une direction de répartition des parties intérieures d'encoche d'entrée de fil (211) et des parties intérieures d'encoche de sortie de fil (212) dans un groupe de conducteurs de phase et une direction de répartition des parties intérieures d'encoche d'entrée de fil (211) et des parties intérieures d'encoche de sortie de fil (212) dans un autre groupe de conducteurs de phase adjacent audit groupe de conducteurs de phase sont identiques.

9. Stator de moteur selon la revendication 4, dans lequel, lorsque M est un nombre pair, l'extrémité extérieure d'encoche (213) de chacun de la pluralité de conducteurs dans la troisième unité de bobine est dans une même couche de la pluralité d'encoches que la partie intérieure d'encoche adjacente à celle-ci ;
lorsque M est un nombre impair, dans la troisième unité de bobine, l'extrémité extérieure d'encoche (213) adjacente à la partie intérieure d'encoche qui est proche de la deuxième unité de bobine est dans une même couche de la pluralité d'encoches que la partie intérieure d'encoche ; lorsque la troisième unité de bobine est une unité de bobine extérieure, une partie des extrémités extérieures d'encoche (213) adjacentes à la partie intérieure d'encoche dans une couche la plus extérieure est dans une même couche que la partie intérieure d'encoche, et une autre partie des extrémités extérieures d'encoche (213) adjacentes à la partie intérieure d'encoche dans la couche la plus extérieure s'étend depuis une couche dans laquelle se trouve la partie intérieure d'encoche dans la couche la plus extérieure vers un côté éloigné d'un axe central du noyau de fer du stator (1) ; lorsque la troisième unité de bobine est une unité de bobine intérieure, une partie des extrémités extérieures d'encoche (213) adjacentes à la partie intérieure d'encoche dans une couche la plus intérieure est dans une même couche que la partie intérieure d'encoche dans la couche la plus intérieure, et une autre partie des extrémités extérieures d'encoche (213) adjacentes à la partie intérieure d'encoche dans la couche la plus intérieure s'étend depuis une couche dans laquelle se trouve la partie intérieure d'encoche dans la couche la plus intérieure vers un côté proche de l'axe central du noyau de fer du stator (1).

10. Stator de moteur selon la revendication 9, dans lequel, lorsque M est un nombre pair, les directions de répartition, selon la direction circonférentielle du noyau de fer du stator (1), des extrémités extérieures d'encoche (213) de la troisième unité de bobine sont identiques ;
lorsque M est un nombre impair, dans la troisième unité de bobine, les directions de répartition, selon la direction circonférentielle du noyau de fer du stator (1), des extrémités extérieures d'encoche (213) dans des mêmes couches de la pluralité d'encoches sont identiques, et les directions de répartition, selon la direction circonférentielle du noyau de fer du stator (1), des extrémités extérieures d'encoche (213) dans deux couches adjacentes sont opposées ; lorsque la troisième unité de bobine est une unité de bobine extérieure, les directions de répartition, selon la direction circonférentielle du noyau de fer du stator (1), des extrémités extérieures d'encoche (213) s'étendant depuis la couche la plus extérieure vers le côté éloigné de l'axe central du noyau de fer du stator (1) sont identiques, et sont opposées aux directions de répartition, selon la direction circonférentielle du noyau de fer du stator (1), des extrémités extérieures d'encoche (213) dans une couche la plus extérieure ; lorsque la troisième unité de bobine est une unité de bobine intérieure, dans la troisième unité de bobine, les directions de répartition, selon la direction circonférentielle du noyau de fer du stator (1), des extrémités extérieures d'encoche (213) s'étendant depuis la couche la plus intérieure vers le côté proche de l'axe central du noyau de fer du stator (1) sont identiques, et sont opposées aux directions de répartition, selon la direction circonférentielle du noyau de fer du stator (1), des extrémités extérieures d'encoche (213) dans la couche la plus intérieure.

11. Stator de moteur selon l'une quelconque des revendications 2 à 10, dans lequel les deux extrémités extérieures d'encoche (213) de chaque conducteur sont respectivement une extrémité extérieure d'encoche d'entrée de fil et une extrémité extérieure d'encoche de sortie de fil ;
lorsque la troisième unité de bobine est une unité de bobine extérieure, pour les conducteurs d'une même phase, une pluralité de conducteurs sont reliés séquentiellement, et une extrémité extérieure d'encoche de sortie de fil d'un conducteur parmi deux conducteurs adjacents l'un à l'autre selon une direction de connexion est soudée à une extrémité extérieure d'encoche d'entrée de fil de l'autre conducteur parmi les deux conducteurs, une extrémité extérieure d'encoche d'entrée de fil située du côté le plus extérieur selon la direction de connexion étant reliée à une borne de phase, et une extrémité extérieure d'encoche de sortie de fil située du côté le plus extérieur selon la direction de connexion constituant un point neutre de la phase ; à l'exception du point neutre et de l'extrémité extérieure d'encoche d'entrée de fil reliée à la borne de phase, chacune des extrémités extérieures d'encoche (213) d'un conducteur est soudée à une extrémité extérieure d'encoche (213) d'un autre conducteur, l'extrémité extérieure d'encoche (213) de l'autre conducteur étant dans une même direction radiale que, et disposée de manière adjacente à, chacune des extrémités extérieures d'encoche (213) d'un conducteur, et elles sont dans des couches différentes ;
lorsque la troisième unité de bobine est une unité de bobine intérieure, pour les conducteurs d'une même phase, une pluralité de conducteurs sont reliés séquentiellement, et une extrémité extérieure d'encoche de sortie de fil d'un conducteur parmi deux conducteurs adjacents l'un à l'autre selon une direction de connexion est soudée à une extrémité extérieure d'encoche d'entrée de fil de l'autre conducteur parmi les deux conducteurs, une extrémité extérieure d'encoche d'entrée de fil située du côté le plus intérieur selon la direction de connexion étant reliée à une borne de phase, et une extrémité extérieure d'encoche de sortie de fil située du côté le plus intérieur selon la direction de connexion constituant un point neutre de la phase ; à l'exception du point neutre et de l'extrémité extérieure d'encoche d'entrée de fil reliée à la borne de phase, chacune des extrémités extérieures d'encoche (213) d'un conducteur est soudée à une extrémité extérieure d'encoche (213) d'un autre conducteur, l'extrémité extérieure d'encoche (213) de l'autre conducteur étant dans une même direction radiale et disposée de manière adjacente à chacune des extrémités extérieures d'encoche (213) d'un conducteur, et elles sont dans des couches différentes.

12. Moteur, comprenant le stator de moteur selon l'une quelconque des revendications 1 à 11.
